# EUROPÄISCHE PATENTSCHRIFT

(11) **EP 1 290 093 B1**
(45) Veröffentlichungstag und Bekanntmachung des Hinweises auf die Patenterteilung: **12.10.2005**
(21) Anmeldenummer: 01936418.1
(22) Anmeldetag: 01.06.2001
(51) Int. Cl.: C09D 5/36, C09D 5/02, C09D 5/03, C09C 1/64, B05D 5/06

(54) **EFFEKTPIGMENTE ENTHALTENDE PULVERLACKE UND PULVERLACKDISPERSIONEN (PULVERSLURRIES)**
COATING POWDERS CONTAINING EFFECT PIGMENTS AND COATING POWDER DISPERSIONS (POWDER SLURRIES)
PEINTURES PULVERULENTES ET DISPERSIONS DE PEINTURES PULVERULENTES (SUSPENSIONS DE POUDRES) CONTENANT DES PIGMENTS A EFFET

(30) Priorität: 02.06.2000 DE 10027295
(43) Veröffentlichungstag der Anmeldung: 12.03.2003
(73) Patentinhaber: BASF Coatings AG, 48165 Münster (DE)
(72) Erfinder: LASSMANN, Walter, 48165 Münster (DE)
(74) Vertreter: Fitzner, Uwe
(86) Internationale Anmeldenummer: PCT/EP2001/006227
(87) Internationale Veröffentlichungsnummer: WO 2001/092429

(56) Entgegenhaltungen:
- EP-A- 0 755 986
- DE-A- 19 623 372
- US-A- 3 970 577
- US-A- 5 389 139

## Beschreibung

Die vorliegende Erfindung betrifft neue Pulverlacke und Pulverlackdispersionen (Pulverslurries), die Effektpigmente enthalten. Des weiteren betrifft die vorliegende Erfindung die Verwendung der neuen Pulverlacke und Pulverslurries in der Automobillackierung, der Lackierung von Bauwerken im Innen- und Außenbereich, der Lackierung von Möbeln, Türen und Fenstern und der industriellen Lackierung, inklusive Coil Coating und Container Coating.

Farb- und/oder effektgebende Lackierungen von Kraftfahrzeugkarosserien, insbesondere PKW-Karosserien, bestehen heute vorzugsweise aus mehreren Lackschichten, die übereinander appliziert werden und unterschiedliche Eigenschaften aufweisen.

Beispielsweise werden nacheinander eine elektrisch abgeschiedene Elektrotauchlackierung (ETL) als Grundierung, eine Füllerlackierung oder Steinschlagschutzgrundierung, eine Basislackierung und eine Klarlackierung auf ein Substrat aufgebracht. Hierbei dient die ETL insbesondere dem Korossionsschutz des Blechs. Sie wird von der Fachwelt häufig auch als Grundierung bezeichnet. Die Füllerlackierung dient der Abdeckung von Unebenheiten des Untergrundes und gewähren aufgrund ihrer Elastizität die Steinschlagbeständigkeit. Gegebenenfalls kann die Füllerlackierung noch zur Verstärkung des Deckvermögens und zur Vertiefung des Farbtons der Lackierung dienen. Die Basislackierung steuert die Farben und/oder die optischen Effekte bei. Die Klarlackierung dient der Verstärkung der optischen Effekte und dem Schutz der Lackierung vor mechanischer und chemischer Schädigung. Basislackierung und Klarlackierung werden häufig auch zusammenfassend als Decklackierung bezeichnet. Ergänzend wird noch auf Römpp Lexikon Lacke und Druckfarben, Georg Thieme Verlag, Stuttgart, New York, 1998, Seiten 49 und 51, "Automobillacke" verwiesen.

Es ist daher ein wichtiges Ziel der modernen Automobillackierung, die Menge der bei der Lackierung freigesetzten Menge an organischen Lösemitteln signifikant zu verringern, wenn nicht gar auf Null zu bringen. Entsprechende Lacke, wie ETL, wäßrige Füller oder wäßrige Klarlacke, Pulverlacke oder Pulverslurry-Klarlacke, stehen zur Verfügung. Nachteilig ist aber nach wie vor, daß für die Basislackierungen noch immer nichtwässrige, d.h. konventionelle, Basislacke oder Wasserbasislacke mit einem vergleichsweis hohen Anteil an organischen Lösemitteln verwendet werden müssen, um die Pigmente stabil zu dispergieren und einen guten Verlauf der applizierten Schichten zu sichern.

Außerdem müssen bei der gemeinsamen Anwendung der Lacke, insbesondere der Basislacke und Klarlacke, im Rahmen der Herstellung einer farb- und/oder effektgebenden Lackierung ihre Eigenschaften sehr fein aufeinander abgestimmt werden, um beispielsweise ein Einbrechen der nicht ausgehärteten Schichten bei der Anwendung von Naß-in-Naß-Verfahren zu vermeiden und/oder die Rißbildung, die Bildung von Kochern und/oder die Delamination von Schichten zu verhindern.

Es wäre daher wünschenswert, die üblichen und bekannten Basislacke und Wasserbasislacke durch lösemittelfreie Pulverlacke und Pulverslurries, die Effektpigmente (vgl. Römpp Lexikon Lacke und Druckfarben, Georg Thieme Verlag, 1998, Seiten 176, »Effektpigmente« und Seiten 380 und 381 »Metalloxid-Glimmer-Pigmente« bis »Metallpigmente«) enthalten, zu ersetzen. Erste Ansätze hierzu sind bereits vorhanden.

So gehen beispielsweise aus Coatings Partner, The magazine of BASF, Powder Coatings Special, 1/2000, Seiten 4 bis 6, oder der Firmenschrift von BASF Coatings AG "Pulverlacke, Pulverlacke für industrielle Anwendungen", Januar 2000, pigmentierte Pulverlacke hervor, die auch als Basislacke in Betracht kommen.

Desweiteren geht aus der japanischen Patentanmeldung JP 53 109 540 A 1 (Derwent-Referat 78800A/44) eine Lackierung mit einer 10 bis 45µm dicken Basislackierung, hergestellt aus einer nicht näher spezifierten pigmentierten Pulverslurry und einer 30 bis 70µm dicken Klarlackierung hervor.

Aus der deutschen Offenlegungsschrift DE 27 10 421 A 1 ist eine Metalleffektpigmente enthaltende Pulverslurry auf der Basis von aminneutralisierten Acrylatcopolymerisaten und Melaminharzen oder von Polyestern und Epoxidharzen bekannt. Die Herstellung der pigmentierten Pulverslurries erfordert jedoch die Neutralisation der wasserlöslichen aminneutralisierten Ausgangsprodukte mit Salzsäure. Hierdurch können aber die Metalleffektpigmente nachhaltig geschädigt werden. Die bekannte Pulverslurry liefert glatte, glänzende, metallische Beschichtungen. Es ist nicht bekannt, ob sie sich für die Herstellung von effektgebenden Mehrschichtlackierungen eignet.

Aus der japanischen Patentanmeldung JP 02 014 776 A 2 ist eine Mehrschichtlackierung aus Basislackierung und Klarlackierung bekannt, deren Basislackierung aus einer pigmentierten Pulverslurry auf der Basis hydroxylgruppenhaltiger Acrylatcopolymerisate und blockierter Polyisocyanate hergestellt wird.

Aus der amerikanischen Patentschrift US 5,379,947 A 1 sind cosolvensfreie pigmentierte und unpigmentierte Pulverslurries auf der Basis von beispielsweise hydroxylgruppenhaltigen Acrylatcopolymerisaten und blockierten Polyisocyanaten oder glycidylgruppenhaltigen Acrylatcopolymerisaten und Dodecandisäure bekannt.

Ferner sind aus der amerikanischen Patentschrift US 4,268,542 A 1 vergleichbare, Effektpigmente enthaltende Pulverlacke und Pulverslurries bekannt.

Die bekannten pigmentierten Pulverlacke und Pulverslurries weisen indes Metalliceffekte und/oder optische Effekte auf, die den gehobenen Ansprüchen der Automobilserienlackierung, insbesondere im Bereich der Oberklasse, noch nicht gerecht werden können, weswegen sich die Pulverlacke und Pulverslurries noch nicht als Basislacke durchgesetzt haben. Außerdem neigen die bekannten, mit Aluminiumeffektpigmenten pigmentierten Pulverslurries bei längerer Lagerung, insbesondere in der Wärme, zur Zersetzung und Wasserstoffentwicklung.

In US 5,389,139 werden mit speziellen Polymeren, welche sowohl hydrophile als auch hydrophobe Teile enthalten, beschichtete Metallpigmente und deren Einsatz in wäßrigen Beschichtungen beschrieben. Hydrophile Effektpigmente und Pulverlacke bzw. Pulverlackdispersionen sind nicht beschrieben.
Die DE 196 23 372 A beschreibt ein Verfahren zur Herstellung Mehrschichtlackierungen. Hydrophile Effektpigmente und Pulverlacke bzw. Pulverlackdispersionen sind nicht beschrieben.

Aufgabe der vorliegenden Erfindung ist es, Effektpigmente enthaltende neue Pulverlacke und Pulverslurries bereitzustellen, die die Nachteile des Standes der Technik nicht mehr aufweisen, sondern die in ihrer Verwendung als Basislacke effektgebende Mehrschichtlackierungen mit Metalliceffekten und/oder dichroitischen Effekten liefern, die auch den gehobenen Ansprüchen der Automobilhersteller und der Kunden im Segment der Oberklasse genügen. Außerdem sollen die neuen Pulverslurries keine Zersetzung und Wasserstoffentwicklung bei der Lagerung mehr zeigen.

Demgemäß wurden die neuen Pulverlacke und Pulverlackdispersionen (Pulverslurries), enthaltend mindestens ein hydrophiles Effektpigment, gefunden, die im folgenden als "erfindungsgemäße Pulverlacke und Pulverslurries" bezeichnet werden.

Weitere erfindungsgemäße Gegenstände gehen aus der Beschreibung hervor.

Im Hinblick auf den Stand der Technik war es überraschend und für den Fachmann nicht vorhersehbar, daß die erfindungsgemäßen Pulverslurries und Pulverlacke die Herstellung effektgebender Mehrschichtlackierungen gestatten, die auch gehobenen Ansprüchen des Marktes genügen, wobei die besonders gleichmäßige Verteilung der Effektpigmente in der Matrix der Lackierung überraschte. Außerdem war es überraschend, daß die erfindungsgemäßen Pulverslurries keine Zersetzung und Wasserstoffentwicklung der hierin enthaltenen Metalleffektpigmente mehr zeigen.

Noch mehr überraschte, daß die erfindungsgemäßen Pulverslurries die Herstellung sogenannter Kombinationseffektschichten gestatten, die in effektgebenden Mehrschichtlackierungen sowohl die Funktion von Füllerlackierungen und Steinschlagschutzgrundierungen als auch von Basislackierungen haben. Dies ist um so mehr überraschend als zum einen die Pulverslurries stets für die Herstellung von Lackschichten mit im wesentlichen nur einer Funktion vorgeschlagen werden und zum anderen die üblichen und bekannten Füllerlackierungen und Basislackierungen aus Beschichtungsstoffen hergestellt werden, die stofflich sehr unterschiedlich und sehr speziell an ihren jeweiligen Verwendungszweck angepaßt sind.

Im Rahmen der vorliegenden Erfindung umfaßt die Begriff "effektgebende Mehrschichtlackierung" sowohl unbunte (vgl. vgl. Römpp Lexikon Lacke und Druckfarben, Georg Thieme Verlag, 1998, Seite 590, "Unbuntpunkt") als auch bunte, d.h. farbige Mehrschichtlackierungen.

Die erfindungsgemäße Pulverslurry enthält mindestens einen feinverteilten dimensionsstabilen Bestandteil, d.h. einen erfindungsgemäßen Pulverlack, als disperse Phase und ein wäßriges Medium als kontinuierliche Phase.

Der feinverteilte dimensionsstabile Bestandteil oder der erfindungsgemäße Pulverlack kann fest und/oder hochviskos sein. Im Rahmen der vorliegenden Erfindung bedeutet "hochviskos", daß sich die Teilchen unter den üblichen und bekannten Bedingungen der Herstellung, der Lagerung und der Anwendung von Pulverslurries oder Pulverlacken im wesentlichen wie feste Teilchen verhalten. Vorzugsweise ist der Pulverlack fest.

Die einzelnen Teilchen des feinverteilten Bestandteils oder des Pulverlacks sind außerdem dimensionsstabil. Im Rahmen der vorliegenden Erfindung bedeutet "dimensionsstabil", daß die Teilchen unter den üblichen und bekannten Bedingungen der Lagerung und der Anwendung von Pulverslurries und Pulverlacken, wenn überhaupt, nur geringfügig agglomerieren und/oder in kleinere Teilchen zerfallen, sondern auch unter dem Einfluß von Scherkräften im wesentlichen ihre ursprünglichen Form bewahren.

Vorzugsweise liegt der Festkörpergehalt der erfindungsgemäßen Pulverslurry bei 10 bis 80, bevorzugt 15 bis 75, besonders bevorzugt 20 bis 70, ganz besonders bevorzugt 25 bis 70 und insbesondere 30 bis 65 Gew.-%, jeweils bezogen auf die erfindungsgemäße Pulverslurry.

Bei dem erfindungsgemäßen Pulverlack liegt der Festkörpergehalt naturgemäß bei 100 Gew.-%.

Vorzugsweise liegt die mittlere Teilchengröße der feinverteilten dimensionsstabilen Bestandteile der erfindungsgemäßen Pulverslurry bei 0,8 bis 40 µm, bevorzugt 0,8 bis 20 µm, und besonders bevorzugt bei 2 bis 6 µm. Unter mittlerer Teilchengröße wird der nach der Laserbeugungsmethode ermittelte 50%-Medianwert verstanden, d.h., 50% der Teilchen haben einen Teilchendurchmesser ≤ dem Medianwert und 50% der Teilchen einen Teilchendurchmesser ≥ dem Medianwert. Generell fmdet die Teilchengröße der feinverteilten dimensionstabilen Bestandteile ihre obere Begrenzung dann, wenn die Teilchen aufgrund ihrer Größe beim Einbrennen nicht mehr vollständig verlaufen können und damit der Filmverlauf negativ beeinflußt wird. Als Obergrenze werden 40 µm für sinnvoll erachtet, da ab dieser Teilchengröße mit einer Verstopfung der Spülkanäle der hochempfindlichen Applikationsapparaturen zu rechnen ist.

Pigmentierte Pulverslurries mit derartigen mittleren Teilchengrößen weisen ein besseres Applikationsverhalten auf und zeigen bei den applizierten Filmstärken von > 30µm, wie sie derzeitig in der Automobilindustrie bei der Erstlackierung von Automobilen praktiziert werden, überraschenderweise eine deutlich geringere Neigung zu Kochern und zum "mudcracking" als herkömmliche Kombinationen von Füller, Basislack und Klarlack auf

Die Korngrößenverteilung der erfindungsgemäßen Pulverlacke kann vergleichsweise breit variieren und richtet sich nach dem jeweiligen Verwendungszweck. Vorzugsweise ist die Korngrößenverteilung vergleichsweise eng mit einem sehr geringen Anteil an Grobkorn (Korngrößen oberhalb 95µm) und an Feinstkorn (Korngrößen unter 5,0µm). Besonders bevorzugt werden Pulverlacke mit der in der europäischen Patentanmeldung EP 0 666 779 A 1 beschriebenen Korngrößenverteilung angewandt.

Überraschenderweise zeigen die erfindungsgemäßen Pulverlacke im wesentlichen die gleichen Vorteile, wie sie vorstehend bei den erfindungsgemäßen Pulverslurries aufgeführt werden.

Die erfmdungsgemäße Pulverslurry und der erfindungsgemäße Pulverlack sind vorzugsweise frei von organischen Lösemitteln (Cosolventien). Im Rahmen der vorliegenden Erfindung bedeutet dies, daß sie einen Restgehalt an flüchtigen Lösemitteln von < 2,0 Gew.-%, bevorzugt < 1,5 Gew.-% und besonders bevorzugt < 1,0 Gew.-% haben. Erfindungsgemäß ist es von ganz besonderem Vorteil, wenn der Restgehalt unterhalb der gaschromatographischen Nachweisgrenze liegt.

Der erfindungswesentliche Bestandteil der erfindungsgemäßen Pulverlacke und Pulverslurries ist mindestens ein hydrophiles Effektpigment.

Zu dem Begriff Effektpigmente wird auf Römpp Lexikon Lacke und Druckfarben, Georg Thieme Verlag, 1998, Seiten 176, »Effektpigmente«, und Seiten 380 und 381 »Metalloxid-Glimmer-Pigmente« bis »Metallpigmente«, verwiesen. Als Effektpigmente kommen demnach Metallplättchenpigmente wie handelsübliche Aluminiumbronzen, gemäß DE-A-36 36 183 chromatierte Aluminiumbronzen, handelsübliche Edelstahlbronzen und metallhaltige und nichtmetallische Effektpigmente, wie zum Beispiel Perlglanz- bzw.

Interferenzpigmente, in Betracht. Besonders bevorzugt werden Metalleffektpigmente, insbesondere Aluminiumeffektpigmente verwendet.

Im Rahmen der vorliegenden Erfindung ist unter der Eigenschaft hydrophil die konstitutionelle Eigenschaft eines Moleküls oder einer funktionellen Gruppe zu verstehen, in die wäßrige Phase einzudringen oder darin zu verbleiben. Demgemäß ist im Rahmen der vorliegenden Erfindung unter der Eigenschaft hydrophob die konstitutionelle Eigenschaft eines Moleküls oder einer funktionellen Gruppe zu verstehen, sich gegenüber Wasser exophil zu verhalten, d. h., sie zeigen die Tendenz, in Wasser nicht einzudringen oder die wäßrige Phase zu verlassen. Ergänzend wird auf Römpp Lexikon Lacke und Druckfarben, Georg Thieme Verlag, Stuttgart, New York, 1998, »Hydrophilie«, »Hydrophobie«, Seiten 294 und 295, verwiesen.

Für die Hydrophilierung der erfindungsgemäß zu verwendenden Effektpigmente kommen alle denkbaren Methoden in Betracht, wie etwa die Herstellung von Effektpigmenten, deren Oberfläche aufgrund der chemischen Zusammensetzung des Effektpigments als solchem oder der obersten Schicht des Effektpigments hydrophil ist, oder die Anwendung von Oberflächenreaktionen, die hydrophile funktionelle Gruppen an der Oberfläche erzeugen, wie saure oder basische Gruppen.

Erfindungsgemäß ist es indes von Vorteil, die Oberfläche der Effektpigmente mit grenzflächenaktiven Stoffen zu belegen. Dies hat den wesentlichen Vorteil, daß auf aufwendige Syntheseverfahren oder die nachträgliche chemische Modifizierung, die immer die Gefahr einer Veränderung der wesentlichen anwendungstechnischen Eigenschaften der Effektpigmente in sich birgt, verzichtet werden kann. Außerdem hat dies den wesentlichen Vorteil, daß man mit einem Minimum an Zusatzstoffen auskommt, genügt doch in vielen Fällen bereits ein Monolayer der grenzflächenaktiven Stoffe, um den gewünschten Effekt zu erzielen. In vielen Fällen braucht dieser Monolayer die Effektpigmentoberfläche noch nicht einmal vollständig zu bedecken, sondern es genügt eine partielle Bedeckung.

Die Menge grenzflächenaktiver Stoffen zur Hydrophilierung der Effektpigmente kann daher von Fall zu Fall sehr stark variieren. Vorzugsweise werden Mengen von weniger als 1 Gew.-%, insbesondere weniger als 0,5 Gew., jeweils bezogen auf die Menge des Effektpigments und des grenzflächenaktiven Stoffs, verwendet.

Vorzugsweise hat das hydrophile Effektpigment nach der Beschichtung mit den grenzflächenaktiven Stoffen noch immer eine pulverförmige Konsistenz.

Im Rahmen der vorliegenden Erfindung ist unter einem grenzflächenaktiven Stoff eine Verbindung zu verstehen, die in einer Flüssigkeit gelöst oder dispergiert, an einer Grenzfläche bevorzugt absorbiert werden und dadurch die Grenzflächenspannung herabsetzen (vgl. Römpp Lexikon Lacke und Druckfarben, Georg Thieme Verlag, 1998, Seite 271, "Grenzflächenaktive Stoffe", Grenzflächenaktivität" und "Grenzflächenspannung".

Als grenzflächenaktive Stoffe kommen insbesondere Tenside in Betracht, die die zum einen nicht mit den Effektpigmenten reagieren und/oder diese agglomerieren, keine störende Eigenfarbe aufweisen, optisch transparent sind, keine Farbtonverschiebung hervorrufen und/oder keine störenden physikalische und/oder chemische Wechselwirkungen mit den übrigen Bestandteilen der erfindungsgemäßen Pulverlacke und Pulverslurries eingehen, wie etwa die Salzbildung oder Adduktbildung. Der Fachmann kann daher die geeigneten Tenside aufgrund seines allgemeinen Fachwissens gegebenenfalls unter Zuhilfenahme einfacher orientierender Versuch auswählen.

Besonders gut geeignet sind Niotenside.

Erfindungsgemäß kommen als Niotenside oder nicht ionische Tenside (vgl. Römpp Lexikon Lacke und Druckfarben, Georg Thieme Verlag, 1998, Seite 410, "Niotenside") Tenside in Betracht, deren Hydrophilie durch Polyetherketten, Hydroxylgruppen, Carbonsäureamidgruppen und/oder Estergruppen, insbesondere aber Polyetherketten, eingestellt wird. Beispiele gut geeigneter Niotenside sind Addukte von Ethylenoxid und/oder Propylenoxid an Fettalkohole, Alkylphenole, Fettsäuren, niedere Alkohole oder Glykole (Polyalkylenglykole), von denen die Polyalkylenglykole besonders vorteilhaft sind und daher erfindungsgemäß bevorzugt verwendet werden.

Beispiele gut geeigneter Polyalkylenglykole sind Polyethylenglykole, Polypropylenglykole, Blockmischpolymerisate von Ethylenoxid und Propylenoxid (Pluronics®) oder Polytetramethylenglykole (Polytetrahydrofurane) (vgl. Römpp Lexikon Lacke und Druckfarben, Georg Thieme Verlag, 1998, Seite 457, "Polyalkylenglykole"), von denen die Polypropylenglykole besonders vorteilhaft sind und daher erfindungsgemäß besonders bevorzugt verwendet werden.

Besonders gut geeignete Polypropylenglykole weisen ein zahlenmittleres Molekulargewicht von 350 bis 1.000, bevorzugt 400 bis 950, besonders bevorzugt 450 bis 900, ganz besonder bevorzugt 500 bis 850 und insbesondere 550 bis 800 Dalton auf.

Die Polypropylenglykole sind kommerzielle Produkte und werden beispielsweise von der Firma BASF Aktiengesellschaft unter der Marke Pluriol® 400, 600 oder 900 vertrieben, wobei die nachgestellten Ziffern das Molekulargewicht oder dessen Größenordnung angeben.

Die hydrophilen Effektpigmente können eine vergleichsweise enge Korngrößenverteilung haben. Hierbei liegt die mittlere Teilchengröße - wie nachstehend definiert - vorzugsweise bei 5 bis 20 und insbesondere bei 10 bis 11 µm, wobei die maximale Teilchengröße im allgemeinen 30 und insbesondere 25 µm nicht übersteigt

Die hydrophilen Effektpigmente können aber auch eine vergleichsweise breite Korngrößenverteilung aufweisen. D.h., daß das betreffende hydrophilierte Effektpigment eine vergleichsweise große Menge an Feinkorn, d.h. Pigmentpartikel einer Korngröße im Bereich von 1 bis 10 µm, und eine vergleichsweise große Menge an Grobkorn einer Korngröße im Bereich von 70 bis 90 µm aufweist. Hieraus resultiert eine besonders flache Steigung der kumulativen Kornverteilungskurve. Vorzugsweise liegt die minimale Korngröße bei 1,0, bevorzugt bei 3,0, besonders bevorzugt bei 5,0, ganz besonders bevorzugt bei 8,0 und insbesondere bei 10 µm. Die maximale Korngröße liegt vorzugsweise bei 90, bevorzugt bei 80, besonders bevorzugt bei 70, ganz besonders bevorzugt bei 60 und insbesondere bei 50 µm. Die mittlere Teilchengröße, wie nachstehend definiert, liegt vorzugsweise bei 20 bis 60, bevorzugt bei 22 bis 58, besonders bevorzugt bei 24 bis 56, ganz besonders bevorzugt bei 26 bis 54 und insbesondere bei 28 bis 52 µm.

Die Herstellung der erfindungsgemäß bevorzugt verwendeten hydrophilen Effektpigmente weist keine methodischen Besonderheiten auf, sondern erfolgt durch Applikation der Tenside, insbesondere der Niotenside, auf den Effektpigmenten in geeigneten Mischaggregaten für Pulver, die eine schonende Beschichtung der Effektpigmente ermöglichen, wie Wirbelschichtvorrichtungen oder Mühlen. Falls erforderlich schließt sich der Beschichtung eine Trocknung, eine weitere Mahlung und/oder Sichtung der hydrophilen Effektpigmente an.

In einer ersten Ausführungsform, die erfindungsgemäß bevorzugt ist, enthalten die feinverteilten dimensionsstabilen Bestandteile der erfindungsgemäßen Pulverklarlacke und Pulverslurries die Gesamtmenge der eingesetzten hydrophilen Effektpigmente.

In einer zweiten Ausführungsform, die erfindungsgemäß bevorzugt ist, enthalten die feinverteilten dimensionsstabilen Bestandteile der erfindungsgemäßen Pulverklarlacke und Pulverslurries keine hydrophilen Effektpigmente; d.h. alle eingesetzten hydrophilen Effektpigmente liegen als separate feste Phase vor. Für deren Teilchengröße gilt das vorstehend Gesagte sinngemäß.

In einer dritten Ausführungsform, die erfindungsgemäß bevorzugt ist, enthalten die feinverteilten dimensionsstabilen Bestandteile der erfindungsgemäßen Pulverklarlacke und Pulverslurries einen Teil der eingesetzen hydrophilen Effektpigmente, wogegen der andere Teil als separate feste Phase vorliegt. Hierbei kann es sich bei dem in den feinverteilten dimensionsstabilen Bestandteilen vorliegenden Anteil um die Hauptmenge, d.h. um mehr als 50% der eingesetzten hydrophilen Effektpigmente handeln. Es könnnen sich indes auch weniger als 50% in den feinverteilten dimensionsstabilen Bestandteilen befinden. Hinsichtlich der Teilchengrößen gilt das vorstehend Gesagte auch hier sinngemäß.

Welcher Variante der erfindungsgemäßen Pulverklarlacke und Pulverslurries der Vorzug gegeben wird, richtet sich insbesondere nach der Natur der hydrophilen Effektpigmente und/oder nach dem Verfahren, mit dem die jeweils verwendeten erfindungsgemäßen Pulverklarlacke und Pulverslurries hergestellt werden. In den vielen Fällen bietet die zweite bevorzugte Ausführungsform besondere Vorteile, weswegen sie insbesondere im Falle von Pulverslurries erfmdungsgemäß besonders bevorzugt ist.

Der Gehalt der erfindungsgemäßen Pulverklarlacke und Pulverslurries an den erfmdungsgemäß zu verwendenden hydrophilen Effektpigmenten kann sehr breit variieren und richtet sich nach den Erfordernissen des Einzelfalls, insbesondere nach dem einzustellenden optischen Effekt und/oder dem Deckvermögen der jeweils verwendeten hydrophilen Effektpigmente. Vorzugsweise liegt der Gehalt an beschichteten Effektpigmenten bei 0,1 bis 20, bevorzugt 0,3 bis 18, besonders bevorzugt 0,5 bis 16, ganz besonders bevorzugt 0,7 bis 14 und insbesondere 0,9 bis 12 Gew.-%, jeweils bezogen auf den erfindungsgemäßen Pulverlack oder auf den Festkörper der erfindungsgemäßen Pulverslurry.

Außer den erfindungsgemäß zu verwendenden hydrophilen Effektpigmenten können die erfindungsgemäßen Pulverklarlacke und Pulverslurries weitere übliche und bekannte farb- und/oder effektgebende Pigmente enthalten.

Diese Pigmente können aus anorganischen oder organischen Verbindungen bestehen. Die erfindungsgemäßen Pulverlacke und Pulverslurries gewährleisten daher aufgrund dieser Vielzahl geeigneter Pigmente eine universelle Einsatzbreite und ermöglicht die Realisierung einer Vielzahl von besonders schönen Farbtönen und optischen Effekten.

Beispiele für geeignete Effektpigmente sind die Substrate der erfindungsgemäß zu verwendenden hydrophilen Effektpigmente.

Beispiele für geeignete anorganische farbgebende Pigmente sind Titandioxid, Eisenoxide und Ruß. Beispiele für geeignete organische farbgebende Pigmente sind Thioindigopigmente, Indanthren-Blau, Irgalith-Blau, Heliogen-Blau, Irgazin-Blau, Palomar Blue, Cromophthal-Rot, Hostaperm Rosa, Irgazin-Orange, Sicotrans-Gelb, Sicotan-Gelb, Hostaperm-Gelb, Paliotan-Gelb, und Heliogen-Grün.

Ergänzend wird auf Römpp Lexikon Lacke und Druckfarben, Georg Thieme Verlag, 1998, Seiten 180 und 181, »Eisenblau-Pigmente« bis »Eisenoxidschwarz«, Seiten 451 bis 453, »Pigmente« bis »Pigmentvolumenkonzentration«, Seite 563, »Thioindigo-Pigmente« und Seite 567, »Titandioxid-Pigmente«, verwiesen.

Die Pigmente können, wie vorstehend bei den hydrophilen Effektpigmenten beschrieben, innerhalb und außerhalb der feinteiligen dimensionsstabilen Bestandteile der erfindungsgemäßen Pulverlacke und Pulverslurries vorliegen. Hinsichtlich der Teilchengrößen gilt das vorstehend Gesagte auch hier sinngemäß.

Die erfindungsgemäßen Pulverlacke und Pulverslurries können außerdem noch organische und anorganische Füllstoffe enthalten, die wie die Pigmente innerhalb und außerhalb der feinteiligen dimensionsstabilen Bestandteile vorliegen können; das bei den Pigmenten Gesagte gilt hier sinngemäß.

Beispiele geeigneter organischer und anorganischer Füllstoffe sind Kreide, Calciumsulfate, Bariumsulfat, Silikate wie Talk oder Kaolin, Kieselsäuren, Oxide wie Aluminiumhydroxid oder Magnesiumhydroxid oder organische Füllstoffe wie Textilfasern, Cellulosefasern, Polyethylenfasern, Polyacrylnitrilpulver, Polyamidpulver oder Holzmehl. Ergänzend wird auf Römpp Lexikon Lacke und Druckfarben, Georg Thieme Verlag, 1998, Seiten 250 ff., »Füllstoffe«, verwiesen. Weitere Beispiele geeigneter Füllstoffe sind aus der deutschen Patentanmeldung DE 196 06 706 A 1, Spalte 8, Zeilen 30 bis 64, bekannt. Vorzugsweise werden sie in den dort angegebenen Mengen eingesetzt.

Die Pigmente und Füllstoffe können auch in ultrafeiner, nicht deckender Form vorliegen.

Der Anteil der Pigmente, Füllstoffe und erfindungsgemäß zu verwendenden hydrophilen Effektpigmente an den erfindungsgemäßen Pulverlacken und Pulverslurries kann sehr breit variieren und richtet sich nach den Erfordernissen des Einzelfalls, insbesondere nach dem einzustellenden optischen Effekt und/oder dem Deckvermögen der jeweils verwendeten Pigmente. Vorzugsweise liegt der Gehalt an Pigmenten, Füllstoffen und Effektpigmenten bei 1,0 bis 80, bevorzugt 2,0 bis 75, besonders bevorzugt 3,0 bis 70, ganz besonders bevorzugt 4,0 bis 65 und insbesondere 5,0 bis 60 Gew.-%, jeweils bezogen auf auf den erfindungsgemäßen Pulverlack oder auf den Festkörper der erfindungsgemäßen Pulverslurry.

Die erfindungsgemäßen Pulverlacke und Pulverslurries können zusätzlich zu den vorstehend beschriebenen Pigmenten und/oder Füllstoffen oder anstelle von diesen molekulardispers verteilte organische Farbstoffe enthalten.

Diese molekulardispers verteilten Farbstoffe liegen in den feinverteilten dimensionsstabilen Bestandteilen der erfindungsgemäßen Pulverlacke vor.

In den erfindungsgemäßen Pulverslurries können sie entweder in den dispergierten feinverteilten dimensionsstabilen Bestandteilen oder in der kontinuierlichen Phase der erfindungsgemäßen Pulverslurries vorhanden sein.

Sie können indes auch in den dispergierten feinverteilten dimensionsstabilen Bestandteilen und in der kontinuierlichen Phase vorliegen. Hierbei kann es sich bei dem in den feinverteilten dimensionsstabilen Bestandteilen vorliegenden Anteil um die Hauptmenge, d.h. um mehr als 50% der eingesetzten organischen Farbstoffe handeln. Es könnnen sich indes auch weniger als 50% hierin befinden. Die Verteilung der organischen Farbstoffe zwischen den Phasen kann dem thermodynamischen Gleichgewicht entsprechen, das aus der Löslichkeit der organischen Farbstoffe in den Phasen resultiert. Die Verteilung kann aber auch weit von dem thermodynamischen Gleichgewicht entfernt liegen.

Geeignet sind alle organischen Farbstoffe, die in den erfindungsgemäßen Pulverlacken und Pulverslurries im vorstehend geschilderten Sinne löslich sind. Gut geeignet sind lichtechte organische Farbstoffe. Besonders gut geeignet sind lichtechte organische Farbstoffe mit einer geringen oder nicht vorhandenen Neigung zur Migration. Die Migrationsneigung kann der Fachmann anhand seines allgemeinen Fachwissens abschätzen und/oder mit Hilfe einfacher orientierender Vorversuche beispielsweise im Rahmen von Tönversuchen ermitteln.

Der Gehalt der erfindungsgemäßen Pulverlacke und Pulverslurries an den molekulardispers verteilten organischen Farbstoffen kann außerordentlich breit variieren und richtet sich in erster Linie nach der Farbe und dem Buntton, der eingestellt werden soll, sowie nach der Menge der gegebenenfalls vorhandenen Pigmente und/oder Füllstoffe

Die erfindungsgemäßen Pulverlacke und Pulverslurries können physikalisch oder thermisch und/oder mit aktinischer Strahlung härtbar sein. Die thermisch härtbaren Pulverlacke und Pulverslurries wiederum können selbstvernetzend oder fremdvernetzend sein.

Im Rahmen der vorliegenden Erfindung bedeutet der Begriff "physikalische Härtung" die Härtung einer Schicht aus einem Beschichtungsstoff durch Verfilmung durch Lösemittelabgabe aus dem Beschichtungsstoff, wobei die Verknüpfung innerhalb der Beschichtung über Schlaufenbildung der Polymermoleküle der Bindemittel (zu dem Begriff vgl. Römpp Lexikon Lacke und Druckfarben, Georg Thieme Verlag, Stuttgart, New York, 1998, »Bindemittel«, Seiten 73 und 74) erfolgt. Oder aber die Verfilmung erfolgt über die Koaleszenz von Bindemittelteilchen (vgl. Römpp Lexikon Lacke und Druckfarben, Georg Thieme Verlag, Stuttgart, New York, 1998, »Härtung«, Seiten 274 und 275). Üblicherweise sind hierfür keine Vernetzungsmittel notwendig. Gegebenenfalls kann die physikalische Härtung durch Luftsauerstoff, Hitze oder durch Bestrahlen mit aktinischer Strahlung unterstützt werden.

Im Rahmen der vorliegenden Erfindung bezeichnet der Begriff "selbstvernetzend" die Eigenschaft eines Bindemittels mit sich selbst Vernetzungsreaktionen einzugehen. Voraussetzung hierfür ist, daß in den Bindemitteln bereits beide Arten von komplementären reaktiven funktionellen Gruppen enthaltend sind, die für eine Vernetzung notwendig sind. Als fremdvernetzend werden dagegen solche Beschichtungsstoffe, Klebstoffe und Dichtungsmassen bezeichnet, worin die eine Art der komplementären reaktiven funktionellen Gruppen in dem Bindemittel, und die andere Art in einem Härter oder Vernetzungsmittel vorliegen. Ergänzend wird hierzu auf Römpp Lexikon Lacke und Druckfarben, Georg Thieme Verlag, Stuttgart, New York, 1998, »Härtung«, Seiten 274 bis 276, insbesondere Seite 275, unten, verwiesen.

Im Rahmen der vorliegenden Erfindung ist unter aktinischer Strahlung elektromagnetische Strahlung, wie nahes Infrarot (NIR), sichtbares Licht, UV-Strahlung oder Röntgenstrahlung, insbesondere UV-Strahlung, und Korpuskularstrahlung wie Elektronenstrahlung zu verstehen.

Werden die thermische und die Härtung mit aktinischem Licht bei einem Pulverlack gemeinsam angewandt, spricht man auch von "Dual Cure" und "Dual-Cure-Pulverlack" bzw. "Dual-Cure-Pulverslurry".

Die erfindungsgemäßen Pulverlacke und Pulverslurries enthalten mindestens ein Bindemittel.

Die Bindemittel sind oligomere und polymere Harze.

Erfindungsgemäß ist es von Vorteil, wenn die Mindestfilmbildetemperatur der Bindemittel mindestens 0 °C, bevorzugt mindestens 10, besonders bevorzugt mindestens 15, ganz besonders bevorzugt mindestens 20 und insbesondere mindestens 25 °C beträgt. Die Mindestfilmbildetemperatur kann ermittelt werden, indem eine wäßrige Dispersion des Bindemittels mittels einer Rakel auf eine Glasplatte aufgezogen oder ein feinverteiltes Bindemittelpulver auf eine Glasplatte appliziert und auf einem Gradientenofen erwärmt wird. Die Temperatur, bei der die pulverförmige Schicht verfilmt, wird als Mindestfilmbildetemperatur bezeichnet. Ergänzend wird auf Römpp Lexikon Lacke und Druckfarben, Georg Thieme Verlag, Stuttgart, New York, 1998, »Mindestfilmbildetemperatur«, Seite 391, verwiesen.

Beispiele für geeignete Bindemittel sind statistisch, alternierend und/oder blockartig aufgebaute lineare und/oder verzweigte und/oder kammartig aufgebaute (Co)Polymerisate von ethylenisch ungesättigten Monomeren, oder Polyadditionsharze und/oder Polykondensationsharze. Zu diesen Begriffen wird ergänzend auf Römpp Lexikon Lacke und Druckfarben, Georg Thieme Verlag, Stuttgart, New York, 1998, Seite 457, »Polyaddition« und »Polyadditionsharze (Polyaddukte)«, sowie Seiten 463 und 464, »Polykondensate«, »Polykondensation« und »Polykondensationsharze«, sowie Seiten 73 und 74, "Bindemittel", verwiesen.

Beispiele geeigneter (Co)Polymerisate sind (Meth)Acrylat(co)polymerisate oder partiell verseifte Polyvinylester, insbesondere (Meth)Acrylatcopolymerisate.

Beispiele geeigneter Polyadditionsharze und/oder Polykondensationsharze sind Polyester, Alkyde, Polyurethane, Polylactone, Polycarbonate, Polyether, Epoxidharz-Amin-Addukte, Polyharnstoffe, Polyamide, Polyimide, Polyester-Polyurethane, Polyether-Polyurethane oder Polyester-Polyether-Polyurethane, insbesondere Polyester-Polyurethane.

Von diesen Bindemitteln weisen die (Meth)Acrylat(co)polymerisate besondere Vorteile auf und werden deshalb besonders bevorzugt verwendet.

Die selbstvernetzenden Bindemittel der thermisch härtbaren Pulverlacke und Pulverslurries und der erfindungsgemäßen Dual-Cure-Pulverlacke und - Pulverslurries enthalten reaktive funktionelle Gruppen, die mit Gruppen ihrer Art oder mit komplementären reaktiven funktionellen Gruppen Vernetzungsreaktionen eingehen können. Die fremdvernetzenden Bindemittel enthalten reaktive funktionelle Gruppen, die mit komplementären reaktiven funktionellen Gruppen, die in Vernetzungsmitteln vorliegen, Vernetzungsreaktionen eingehen können. Beispiele geeigneter erfindungsgemäß zu verwendender komplementärer reaktiver funktioneller Gruppen sind in der folgenden Übersicht zusammengestellt. In der Übersicht steht die Variable R für einen acyclischen oder cyclischen aliphatischen, einen aromatischen und/oder einen aromatisch-aliphatischen (araliphatischen) Rest; die Variablen R' und R" stehen für gleiche oder verschiedene aliphatische Reste oder sind miteinander zu einem aliphatischen oder heteroaliphatischen Ring verknüpft.

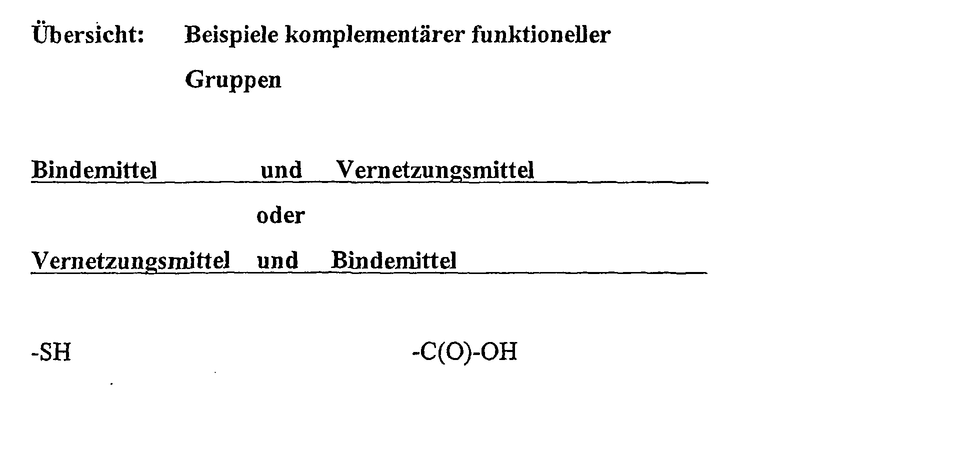

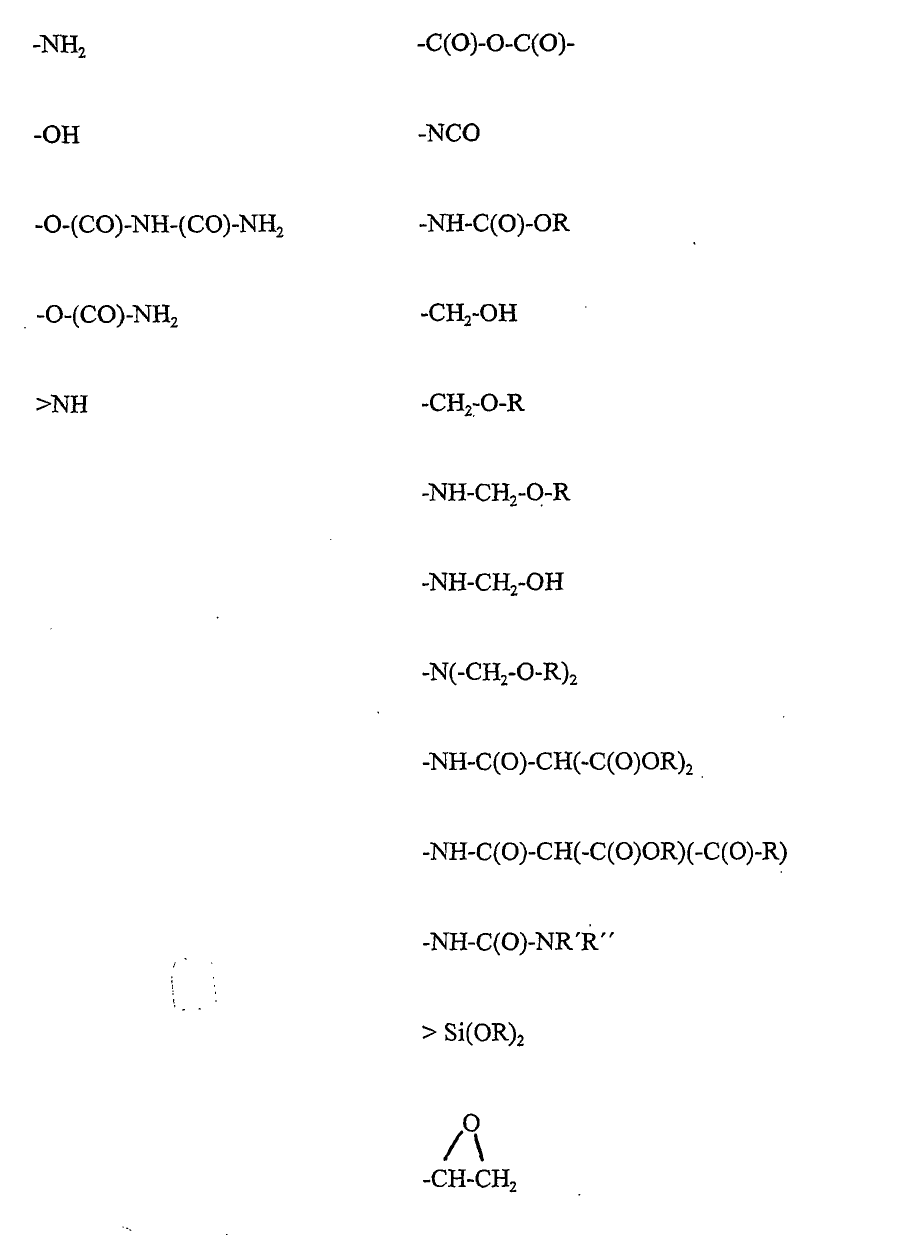

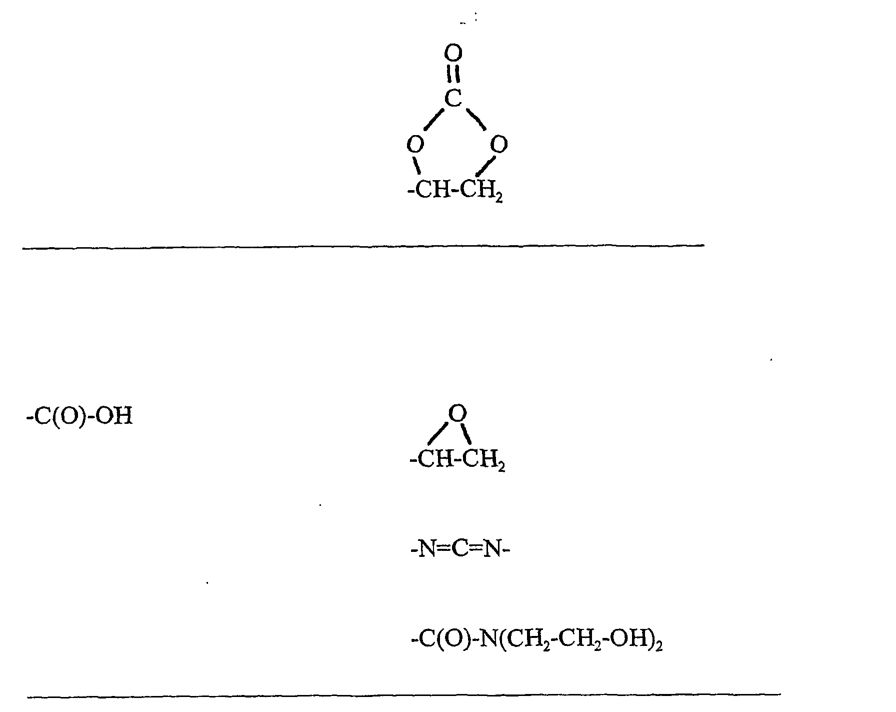

Die Auswahl der jeweiligen komplementären Gruppen richtet sich zum einen danach, daß sie bei der Herstellung, der Lagerung, der Applikation und dem Aufschmelzen der erfindungsgemäßen Pulverlacke und Pulverslurries keine unerwünschten Reaktionen, insbesondere keine vorzeitige Vernetzung, eingehen und/oder gegebenenfalls die Härtung mit aktinischer Strahlung nicht stören oder inhibieren dürfen, und zum anderen danach, in welchem Temperaturbereich die Vernetzung stattfinden soll.

Vorzugsweise werden bei den erfindungsgemäßen Pulverlacken und Pulverslurries Vernetzungstemperaturen von 60 bis 180°C angewandt. Es werden daher vorzugsweise Thio-, Hydroxyl-, N-Methylolamino- N-Alkoxymethylamino-, Imino-, Carbamat-, Allophanat- und/oder Carboxylgruppen, bevorzugt Hydroxyl- oder Carboxylgruppen, einerseits und vorzugsweise Vernetzungsmittel mit Anhydrid-, Carboxyl-, Epoxy-, blockierten Isocyanat-, Urethan-, Methylol-, Methylolether-, Siloxan-, Carbonat-, Amino-, Hydroxy- und/oder beta-Hydroxyalkylamidgruppen, bevorzugt Epoxy-, beta-Hydroxyalkylamid-, blockierte Isocyanat-, Urethan- oder Alkoxymethylaminogruppen, andererseits angewandt.

Im Falle selbstvernetzender erfindungsgemäßer Pulverlacke und Pulverslurries enthalten die Bindemittel insbesondere Methylol-, Methylolether- und/oder N-Alkoxymethylaminogruppen.

Komplementäre reaktive funktionelle Gruppen, die für die Verwendung in den erfindungsgemäßen Pulverlacken und Pulverslurries besonders gut geeignet sind, sind
- Carboxylgruppen einerseits und Epoxidgruppen und/oder beta-Hydroxyalkylamidgruppen andererseits sowie
- Hydroxylgruppen einerseits und blockierte Isocyanat-, Urethan- oder Alkoxymethylaminogruppen andererseits.

Die Funktionalität der Bindemittel bezüglich der vorstehend beschriebenen reaktiven funktionellen Gruppen kann sehr breit variieren und richtet sich insbesondere nach der Vemetzungsdichte, die man erzielen will, und/oder nach der Funktionalität der jeweils angewandten Vernetzungsmittel. Beispielsweise liegt im Falle carboxylgruppenhaltiger Bindemittel die Säurezahl vorzugsweise bei 10 bis 100, bevorzugt 15 bis 80, besonders bevorzugt 20 bis 75, ganz besonders bevorzugt 25 bis 70 und insbesondere 30 bis 65 mg KOH/g. Oder im Falle hydroxylgruppenhaltiger Bindemittel liegt die OH-Zahl vorzugsweise bei 15 bis 300, bevorzugt 20 bis 250, besonders bevorzugz 25 bis 200, ganz besonders bevorzugt 30 bis 150 und insbesondere 35 bis 120 mg KOH/g. Oder im Falle epoxidgruppenhaltiger Bindemittel liegt das Epoxidäquivalentgewicht vorzugsweise bei 400 bis 2.500, bevorzugt 420 bis 2.200, besonders bevorzugt 430 bis 2.100, ganz besonders bevorzugt 440 bis 2.000 und indesondere 440 bis 1.900.

Die vorstehend beschriebenen komplementären funktionellen Gruppen können nach den üblichen und bekannten Methoden der Polymerchemie in die Bindemittel eingebaut werden. Dies kann beispielsweise durch den Einbau von Monomeren, die die entsprechenden reaktiven funktionellen Gruppen tragen, und/oder mit Hilfe polymeranaloger Reaktionen geschehen.

Beispiele geeigneter olefinisch ungesättigter Monomere mit reaktiven funktionellen Gruppen sind
(a1) Monomere, welche mindestens eine Hydroxyl-, Amino-, Alkoxymethylamino-, Carbamat-, Allophanat- oder Iminogruppe pro Molekül tragen wie
   - Hydroxyalkylester der Acrylsäure, Methacrylsäure oder einer anderen alpha,beta-olefinisch ungesättigten Carbonsäure, die sich von einem Alkylenglykol ableiten, das mit der Säure verestert ist, oder die durch Umsetzung der alpha,beta-olefinisch ungesättigten Carbonsäure mit einem Alkylenoxid wie Ethylenoxid oder Propylenoxid erhältlich sind, insbesondere Hydroxyalkylester der Acrylsäure, Methacrylsäure, Ethacrylsäure, Crotonsäure, Maleinsäure, Fumarsäure oder Itaconsäure, in denen die Hydroxyalkylgruppe bis zu 20 Kohlenstoffatome enthält, wie 2-Hydroxyethyl-, 2-Hydroxypropyl-, 3-Hydroxypropyl-, 3-Hydroxybutyl-, 4-Hydroxybutylacrylat, -methacrylat, -ethacrylat, - crotonat, -maleinat, -fumarat oder -itaconat; oder Hydroxycycloalkylester wie 1,4-Bis(hydroxymethyl)cyclohexan-, Octahydro-4,7-methano-1H-inden-dimethanol- oder Methylpropandiolmonoacrylat, -monomethacrylat, - monoethacrylat, -monocrotonat, -monomaleinat, -monofumarat oder -monoitaconat; Umsetzungsprodukte aus cyclischen Estern, wie z.B. epsilon-Caprolacton und diesen Hydroxyalkyl- oder - cycloalkylestern;
   - olefinisch ungesättigte Alkohole wie Allylalkohol;
   - Polyole wie Trimethylolpropanmono- oder diallylether oder Pentaerythritmono-, -di- oder -triallylether;
   - Umsetzungsprodukte aus Acrylsäure und/oder Methacrylsäure mit dem Glycidylester einer in alpha-Stellung verzweigten Monocarbonsäure mit 5 bis 18 C-Atomen je Molekül, insbesondere einer Versatic®-Säure, oder anstelle des Umsetzungsproduktes eine äquivalenten Menge Acryl- und/oder Methacrylsäure, die dann während oder nach der Polymerisationsreaktion mit dem Glycidylester einer in alpha-Stellung verzweigten Monocarbonsäure mit 5 bis 18 C-Atomen je Molekül, insbesondere einer Versatic®-Säure, umgesetzt wird;
   - Aminoethylacrylat, Aminoethylmethacrylat, Allylamin oder N-Methyliminoethylacrylat;
   - N,N-Di(methoxymethyl)aminoethylacrylat oder -methacrylat oder N,N-Di(butoxymethyl)aminopropylacrylat oder -methacrylat;
   - (Meth)Acrylsäureamide wie (Meth)Acrylsäureamid, N-Methyl-, N-Methylol-, N,N-Dimethylol-, N-Methoxymethyl-, N,N-Di(methoxymethyl)-, N-Ethoxymethyl- und/oder N,N-Di(ethoxyethyl)-(meth)acrylsäureamid;
   - Acryloyloxy- oder Methacryloyloxyethyl-, propyl- oder butylcarbamat oder -allophanat; weitere Beispiele geeigneter Monomere, welche Carbamatgruppen enthalten, werden in den Patentschriften US-A-3,479,328, US-A-3,674,838, US-A-4,126,747, US-A- 4,279,833 oder US-A-4,340,497 beschrieben;
(a2) Monomere, welche mindestens eine Säuregruppe pro Molekül tragen, wie
   - Acrylsäure, Methacrylsäure, Ethacrylsäure, Crotonsäure, Maleinsäure, Fumarsäure oder Itaconsäure;
   - olefinisch ungesättigte Sulfon- oder Phosphonsäuren oder deren Teilester;
   - Maleinsäuremono(meth)acryloyloxyethylester, Bernsteinsäuremono(meth)acryloyloxyethylester oder Phthalsäuremono(meth)acryloyloxyethylester; oder
   - Vinylbenzoesäure (alle Isomere), alpha-Methylvinylbenzoesäure (alle Isomere) oder Vinylbenzsolsulfonsäure (alle Isomere).
(a3) Epoxidgruppen enthaltende Monomere wie der Glycidylester der Acrylsäure, Methacrylsäure, Ethacrylsäure, Crotonsäure, Maleinsäure, Fumarsäure oder Itaconsäure oder Allylglycidylether.

Sie werden vorzugsweise zur Herstellung von (Meth)Acrylatcopolymerisaten, insbesondere von glycidylgruppenhaltigen, verwendet.

Höherfunktionelle Monomere der vorstehend beschriebenen Art werden im allgemeinen in untergeordneten Mengen eingesetzt. Im Rahmen der vorliegenden Erfindung sind unter untergeordneten Mengen an höherfunktionellen Monomeren solche Mengen zu verstehen, welche nicht zur Vernetzung oder Gelierung der Copolymerisate, insbesondere der (Meth)Acrylatcopolymerisate, führen, es sei denn, man will gezielt vernetzte polymere Mikroteilchen herstellen.

Beispiele geeigneter Monomereinheiten zur Einführung reaktiver funktioneller Gruppen in Polyester oder Polyester-Polyurethane sind 2,2-Dimethylolethyl- oder -propylamin, die mit einem Keton blockiert sind, wobei die resultierende Ketoximgruppe nach dem Einbau wieder hydrolysiert wird; oder Verbindungen, die zwei Hydroxylgruppen oder zwei primäre und/oder sekundäre Aminogruppen sowie mindestens eine Säuregruppe, insbesondere mindestens eine Carboxylgruppe und/oder mindestens eine Sulfonsäuregruppe, enthalten, wie Dihydroxypropionsäure, Dihydroxybernsteinsäure, Dihydroxybenzoesäure, 2,2-Dimethylolessigsäure, 2,2-Dimethylolpropionsäure, 2,2-Dimethylolbuttersäure, 2,2-Dimenthylolpentansäure, ###,###-Diaminovaleriansäure, 3,4-Diaminobenzoesäure, 2,4-Diaminotoluolsulfonsäure oder 2,4-Diamino-diphenylethersulfonsäure.

Ein Beispiel zur Einführung reaktiver funktioneller Gruppen über polymeranaloge Reaktionen ist die Umsetzung Hydroxylgruppen enthaltender Harze mit Phosgen, wodurch Chlorformiatgruppen enthaltende Harze resultieren, und die polymeranaloge Umsetzung der Chlorformiatgruppen enthaltenden Harze mit Ammoniak und/oder primären und/oder sekundären Aminen zu Carbamatgruppen enthaltenden Harzen. Weitere Beispiele geeigneter Methoden dieser Art sind aus den Patentschriften US 4,758,632 A 1, US 4,301,257 A 1 oder US 2,979,514 A 1 bekannt.

Die Bindemittel der erfindungsgemäßen Dual-Cure-Pulverlacke und - Pulverslurries enthalten desweiteren im statistischen Mittel mindestens eine, vorzugsweise mindestens zwei, Gruppe(n) mit mindestens einer mit aktinischer Strahlung aktivierbaren Bindung(en) pro Molekül.

Im Rahmen der vorliegenden Erfindung wird unter einer mit aktinischer Strahlung aktivierbaren Bindung eine Bindung verstanden, die bei Bestrahlen mit aktinischer Strahlung reaktiv wird und mit anderen aktivierten Bindungen ihrer Art Polymerisationsreaktionen und/oder Vernetzungsreaktionen eingeht, die nach radikalischen und/oder ionischen Mechanismen ablaufen. Beispiele geeigneter Bindungen sind Kohlenstoff-Wasserstoff-Einzelbindungen oder Kohlenstoff-Kohlenstoff-, Kohlenstoff-Sauerstoff-, Kohlenstoff-Stickstoff-, Kohlenstoff-Phosphor -oder Kohlenstoff-Silizium-Einzelbindungen oder - Doppelbindungen. Von diesen sind die Kohlenstoff-KohlenstoffDoppelbindungen besonders vorteilhaft und werden deshalb erfindungsgemäß ganz besonders bevorzugt verwendet. Der Kürze halber werden sie im folgenden als "Doppelbindungen" bezeichnet.

Demnach enthält die erfindungsgemäß bevorzugte Gruppe eine Doppelbindung oder zwei, drei oder vier Doppelbindungen. Werden mehr als eine Doppelbindung verwendet, können die Doppelbindungen konjugiert sein. Erfindungsgemäß ist es indes von Vorteil, wenn die Doppelbindungen isoliert, insbesondere jede für sich endständig, in der hier in Rede stehenden Gruppe vorliegen. Erfindungsgemäß ist es von besonderem Vorteil zwei, insbesondere eine, Doppelbindung zu verwenden.

Das Dual-Cure-Bindemittel enthält im statistischen Mittel mindestens eine der vorstehend beschriebenen mit aktinischer Strahlung aktivierbaren Gruppen. Dies bedeutet, daß die Funktionalität des Bindemittels in dieser Hinsicht ganzzahlig, d.h., beispielsweise gleich zwei, drei, vier, fünf oder mehr ist, oder nicht ganzzahlig, d.h., beispielsweise gleich 2,1 bis 10,5 oder mehr ist. Welche Funktionalität man wählt, richtet sich nach den Erfordernissen, die an die jeweilige pigmentierte Dual-Cure-Pulverslurry gestellt werden.

Werden im statistischen Mittel mehr als eine mit aktinischer Strahlung aktivierbare Gruppe pro Molekül angewandt, sind die Gruppen strukturell voneinander verschieden oder von gleicher Struktur.

Sind sie strukturell voneinander verschieden, bedeutet dies im Rahmen der vorliegenden Erfindung, daß zwei, drei, vier oder mehr, insbesondere aber zwei, mit aktinischer Strahlung aktivierbare Gruppen verwendet werden, die sich von zwei, drei, vier oder mehr, insbesondere aber zwei, Monomerklassen ableiten.

Beispiele geeigneter Gruppen sind (Meth)Acrylat-, Ethacrylat-, Crotonat-, Cinnamat-, Vinylether-, Vinylester-, Dicyclopentadienyl-, Norbornenyl-, Isoprenyl-, Isopropenyl-, Allyl- oder Butenylgruppen; Dicyclopentadienyl-, Norbornenyl-, Isoprenyl-, Isopropenyl-, Allyl- oder Butenylethergruppen oder Dicyclopentadienyl-, Norbornenyl-, Isoprenyl-, Isopropenyl-, Allyl- oder Butenylestergruppen, insbesondere aber Acrylatgruppen.

Vorzugsweise sind die Gruppen über Urethan-, Harnstoff-, Allophanat-, Ester-, Ether- und/oder Amidgruppen, insbesondere aber über Estergruppen, an die jeweiligen Grundstrakturen der Bindemittel gebunden. Üblicherweise geschieht dies durch übliche und bekannte polymeranaloge Reaktionen wie etwa die Reaktion von seitenständigen Glycidylgruppen mit den vorstehend beschriebenen olefinisch ungesättigten Monomeren, die eine Säuregruppe enthalten, von seitenständigen Hydroxylgruppen mit den Halogeniden dieser Monomeren, von Hydroxylgruppen mit Doppelbindungen enhaltenden Isocyanaten wie Vinylisocyanat, Methacryloylisocyanat und/oder 1-(1-Isocyanato-1-methylethyl)-3-(1-methylethenyl)-benzol (TMI® der Firma CYTEC) oder von Isocanatgruppen mit den vorstehend beschriebenen hydroxylgruppenhaltigen Monomeren.

Es können in den Dual-Cure-Pulverlacken indes auch Gemische aus rein thermisch härtbaren und rein mit aktinischer Strahlung härtbaren Bindemitteln angewandt werden.

Die rein mit aktinischer Strahlung härtbaren Pulverlacke und Pulverslurries enthalten vorzugsweise rein mit aktinscher Strahlung härtbare Bindemittel, die vorzugsweise nur die vorstehend beschriebenen, mit aktinischer Strahlung aktivierbaren Gruppen enthalten.

Die stoffliche Zusammensetzung der Bindemittel weist im Grunde keine Besonderheiten auf, sondern es kommen
- all die in den US-Patentschrift US 4,268,542 A 1 oder US 5,379,947 A 1 und den Patentanmeldungen DE 27 10 421 A 1, DE 195 40 977 A 1, DE 195 18 392 A 1, DE 196 17 086 A 1, DE 196 13 547 A 1, DE 196 18 657 A 1, DE 196 52 813 A 1, DE 196 17 086 A 1, DE 198 14 471 A 1, DE 196 13 547 A 1, DE 198 41 842 A 1 oder DE 198 41 408 A 1, den nicht vorveröffentlichten deutschen Patentanmeldungen DE 199 08 018.6 oder DE 199 08 013.5 oder der europäischen Patentschrift EP 0 652 264 A 1 beschriebenen, für die Verwendung in thermisch und/oder mit aktinischer Strahlung härtbaren Pulverklarlack-Slurries vorgesehenen Bindemittel,
- all die in den Patentanmeldungen DE 198 35 296 A 1, DE 197 36 083 A 1 oder DE 198 41 842 A 1 beschriebenen, für die Verwendung in Dual-Cure-Klarlacken vorgesehenen Bindemittel oder
- all die in der deutschen Patentanmeldung DE 42 22 194 A 1, der Produkt-Information der Firma BASF Lacke + Farben AG, "Pulverlacke", 1990, oder der Firmenschrift von BASF Coatings AG "Pulverlacke, Pulverlacke für industrielle Anwendungen", Januar, 2000 beschriebenen, für die Verwendung in thermisch härtbaren Pulverklarlacken vorgesehenen Bindemittel
in Betracht.

Hierbei werden bei den thermisch oder thermisch und mit aktinischer Strahlung härtbaren Pulverlacken und Pulverslurries vorwiegend (Meth)Acrylatcopolymerisate verwendet.

Beispiele geeigneter (Meth)Acrylatcopolymerisate sind die epoxidgruppenhaltigen (Meth)Acrylatcopolymerisate mit einem Epoxidäquivalentgewicht vorzugsweise bei 400 bis 2.500, bevorzugt 420 bis 2.200, besonders bevorzugt 430 bis 2.100, ganz besonders bevorzugt 440 bis 2.000 und insbesondere 440 bis 1.900, einem zahlenmittleren Molekulargewicht (gelpermeationschromatographisch unter Verwendung eines Polystyrolstandards bestimmt) von vorzugsweise 2.000 bis 20.000 und insbesondere 3.000 bis 10.000, und einer Glasübergangstemperatur (T_{G}) von vorzugsweise 30 bis 80, bevorzugt 40 bis 70 und insbesondere 40 bis 60°C (gemessen mit Hilfe der differential scanning calometrie (DSC), wie sie insbesondere für die Verwendung in thermisch härtbaren Pulverklarlack-Slurries in Betracht kommen (s.o.) und wie sie außerdem noch in den Patentschriften und Patentanmeldungen EP 0 299 420 A 1, DE 22 14 650 B 1, DE 27 49 576 B 1, US 4,091,048 A 1 oder US 3,781,379 A 1 beschrieben werden.

Als zusätzliche Bindemittel für die Dual-Cure-Pulverlacke und -Pulverslurries oder als die alleinigen Bindemittel für die rein mit aktinischer Strahlung härtbaren Pulverlacke und Pulverslurries kommen die in den den europäischen Patentanmeldungen EP 0 928 800 A 1, EP 0 636 669 A 1, EP 0 410 242 A 1, EP 0 783 534 A 1, EP 0 650 978 A 1, EP 0 650 979 A 1, EP 0 650 985 A 1, EP 0 540 884 A 1, EP 0 568 967 A 1, EP 0 054 505 A 1 oder EP 0 002 866 A 1, den deutschen Patentanmeldungen DE 197 09 467 A 1, DE 42 03 278 A 1, DE 33 16 593 A 1, DE 38 36 370 A 1, DE 24 36 186 A 1 oder DE 20 03 579 B 1, den internationalen Patentanmeldungen WO 97/46549 oder WO 99/14254 oder den amerikanischen Patentschriften US 5,824,373 A 1, US 4,675,234 A 1, US 4,634,602 A 1, 4,424,252 A 1, US 4,208,313 A 1, US 4,163,810 A 1, US 4,129,488 A1, US 4,064,161 A 1 oder US 3,974,303 A 1 beschriebenen, zur Verwendung in UV-härtbaren Klarlacken und Pulverklarlacken vorgesehenen Bindemittel in Betracht.

Auch die Herstellung der Bindemittel weist keine methodischen Besonderheiten auf, sondern erfolgt mit Hilfe der üblichen und bekannten Methoden der Polymerenchemie, wie sie beispielsweise in den vorstehend aufgeführten Patentschriften im Detail beschrieben werden.

Weitere Beispiele geeigneter Herstellverfahren für (Meth)Acrylatcopolymerisate werden in den europäischen Patentanmeldungen oder EP 0 767 185 A 1, den deutschen Patenten DE 22 14 650 B 1 oder DE 27 49 576 B 1 und den amerikanischen Patentschriften US 4,091,048 A 1, US 3,781,379 A 1, US 5,480,493 A 1, US 5,475,073 A 1 oder US 5,534,598 A 1 oder in dem Standardwerk Houben-Weyl, Methoden der organischen Chemie, 4. Auflage, Band 14/1, Seiten 24 bis 255, 1961, beschrieben. Als Reaktoren für die Copolymerisation kommen die üblichen und bekannten Rührkessel, Rührkesselkaskaden, Rohrreaktoren, Schlaufenreaktoren oder Taylorreaktoren, wie sie beispielsweise in der Patentschriften und den Patentanmeldungen DE 1 071 241 B 1, EP 0 498 583 A 1 oder DE 198 28 742 A 1 oder in dem Artikel von K. Kataoka in Chemical Engineering Science, Band 50, Heft 9, 1995, Seiten 1409 bis 1416, beschrieben werden, in Betracht.

Die Herstellung von Polyestern und Alkydharzen wird beispielsweise noch in dem Standardwerk Ullmanns Encyklopädie der technische Chemie, 3. Auflage, Band 14, Urban & Schwarzenberg, München, Berlin, 1963, Seiten 80 bis 89 und Seiten 99 bis 105, sowie in den Büchern: "Résines Alkydes-Polyesters" von J. Bourry, Paris, Verlag Dunod, 1952, "Alkyd Resins" von C. R. Martens, Reinhold Publishing Corporation, New York, 1961, sowie "Alkyd Resin Technology" von T. C. Patton, Intersience Publishers, 1962, beschrieben.

Die Herstellung von Polyurethanen und/oder acrylierten Polyurethanen wird beispielsweise noch in den Patentanmeldungen EP 0 708 788 A 1, DE 44 01 544 A 1 oder DE 195 34 361 A 1 beschrieben.

Der Gehalt der erfindungsgemäßen Pulverlacke oder der dispersen Phase der erfindungsgemäßen Pulverslurries an Bindemitteln kann sehr breit variieren und richtet sich vor allem danach, ob sie physikalisch oder thermisch selbstvernetzend sind. In diesen beiden Fällen kann er vorzugsweise 20 bis 99,9, bevorzugt 25 bis 99,7, besonders bevorzugt 30 bis 99,5 ganz besonders bevorzugt 35 bis 99,3 und insbesondere 40 bis 99,1 Gew.-%, jeweils bezogen auf den Festkörpergehalt der pigmentierten Pulverslurry, betragen. In den anderen Fällen (thermisch oder thermisch und mit aktinischer Strahlung härtbar) liegt der Bindemittelgehalt vorzugsweise bei 10 bis 80, bevorzugt 15 bis 75, besonders bevorzugt 20 bis 70, ganz besonders bevorzugt 25 bis 65 und insbesondere 30 bis 60 Gew.-%, jeweils bezogen auf den erfindungsgemäßen Pulverlack oder den Festkörpergehalt der erfindungsgemäßen Pulverslurry.

Die thermisch oder thermisch und mit aktinischer Strahlung härtbaren, fremdvernetzenden erfindungsgemäßen Pulverlacke und Pulverslurries enthalten mindestens ein Vernetzungsmittel, das die zu den reaktiven funktionellen Gruppen der Bindemittel komplementären reaktiven funktionellen Gruppen enthält. Der Fachmann kann daher die für einen gegebenen Pulverlack oder eine gegebene Pulverslurry geeigneten Vernetzungsmittel leicht auswählen.

Beispiele geeigneter Vernetzungsmittel sind
- Aminoplastharze, wie sie beispielsweise in Römpp Lexikon Lacke und Druckfarben, Georg Thieme Verlag, 1998, Seite 29, »Aminoharze«, dem Lehrbuch "Lackadditive" von Johan Bieleman, Wiley-VCH, Weinheim, New York, 1998, Seiten 242 ff., dem Buch "Paints, Coatings and Solvents", second completely revised edition, Edit. D. Stoye und W. Freitag, Wiley-VCH, Weinheim, New York, 1998, Seiten 80 ff., den Patentschriften US 4 710 542 A 1 oder EP 0 245 700 A 1 sowie in dem Artikel von B. Singh und Mitarbeiter "Carbamylmethylated Melamines, Novel Crosslinkers for the Coatings Industry", in Advanced Organic Coatings Science and Technology Series, 1991, Band 13, Seiten 193 bis 207, beschrieben werden,
- Carboxylgruppen enthaltende Verbindungen oder Harze, wie sie beispielsweise in der Patentschrift DE 196 52 813 A 1 oder 198 41 408 A 1 beschrieben werden, insbesondere Dodecandisäure,
- Epoxidgruppen enthaltende Verbindungen oder Harze, wie sie beispielsweise in den Patentschriften EP 0 299 420 A 1, DE 22 14 650 B 1, DE 27 49 576 B 1, US 4,091,048 A 1 oder US 3,781,379 A 1 beschrieben werden,
- blockierte Polyisocyanate, wie sie beispielsweise in den Patentschriften US 4,444,954 A 1, DE 196 17 086 A 1, DE 196 31 269 A 1, EP 0 004 571 A 1 oder EP 0 582 051 A 1 beschrieben werden,
- beta-Hydroxyalkylamide wie N,N,N',N'-Tetrakis(2-hydroxyethyl)adipamid oder N,N,N',N'-Tetrakis(2-hydroxypropyl)-adipamid und/oder
- Tris(alkoxycarbonylamino)-triazine, wie sie in den Patentschriften US 4,939,213 A 1, US 5,084,541 A 1, US 5,288,865 A 1 oder EP 0 604 922 A 1 beschrieben werden.

Der Gehalt der erfindungsgemäßen Pulverlacke und Pulverslurries an den Vernetzungsmitteln kann ebenfalls sehr breit variieren und richtet sich nach den Erfordernissen des Einzelfalls, insbesondere nach der Anzahl der vorhandenen reaktiven funktionellen Gruppen. Vorzugsweise liegt er bei 1,0 bis 40, bevorzugt 2,0 bis 35, besonders bevorzugt 3,0 bis 30, ganz besonders bevorzugt 4,0 bis 27 und insbesondere 5,0 bis 25 Gew.-%, jeweils bezogen auf den erfindungsgemäßen Pulverlack oder den Festkörpergehalt der erfindungsgemäßen Pulverslurry.

Außer den vorstehend beschriebenen beschichteten Effektpigmenten und Bindemitteln sowie gegebenenfalls den vorstehend beschriebenen Pigmenten, Füllstoffen, Farbstoffen und/oder Vernetzungsmitteln können die erfindungsgemäßen Pulverlacke und Pulverslurries noch mindestens einen Zusatzstoff enthalten. Dieser kann je nach seinen physikalisch chemischen Eigenschaften und/oder seiner Funktion im wesentlichen in den festen feinverteilten Bestandteilen der erfindungsgemäßen Pulverlacke und Pulverslurries oder im Falle der erfindungsgemäßen Pulverslurries im wesentlichen in der kontinuierlichen Phase vorliegen.

Beispiele geeigneter Zusatzstoffe sind
- thermisch härtbare Reaktiverdünner wie stellungsisomere Diethyloctandiole oder Hydroxylgruppen enthaltende hyperverzweigte Verbindungen oder Dendrimere wie sie in der deutschen Patentanmeldung DE 198 50 243 A 1 beschrieben werden;
- mit aktinischer Strahlung härtbare Reaktivverdünner, wie die in Römpp Lexikon Lacke und Druckfarben, Georg Thieme Verlag, Stuttgart, New York, 1998, auf Seite 491 unter dem Stichwort »Reaktivverdünner« beschriebenen;
- Katalysatoren für die Vernetzung wie Dibutylzinndilaurat, Lithiumdecanoat oder Zinkoctoat, mit Aminen blockierte organische Sulfonsäuren, quarternäre Ammoniumverbindungen, Amine, Imidazol und Imidazolderivate wie 2-Styrylimidazol, 1-Benzyl-2-methylimidazol, 2-Methylimidazol und 2-Butylimidazol, wie sie in dem belgischen Patent Nr. 756,693 beschrieben werden, oder Phosphonium-Katalysatoren wie Ethyltriphenylphosphoniumiodid, Ethyltriphenylphosphoniumchlorid, Ethyltriphenylphosphoniumthiocyanat, Ethyltriphenylphosphonium-Acetat-Essigsäurekomplex, Tetrabutylphosphoniumiodid, Tetrabutylphosphoniumbromid und Tetrabutylphosphonium-Acetat-Essigsäurekomplex, wie sie beispielsweise in den US-Patentschriften US 3,477,990 A 1 oder US 3,341,580 A 1 beschrieben werden;
- thermolabile radikalische Initiatoren wie organische Peroxide, organische Azoverbindungen oder C-C-spaltende Initiatoren wie Dialkylperoxide, Peroxocarbonsäuren, Peroxodicarbonate, Peroxidester, Hydroperoxide, Ketonperoxide, Azodinitrile oder Benzpinakolsilylether;
- Photoinitiatoren, wie sie in Römpp Chemie Lexikon, 9. erweiterte und neubearbeitete Auflage, Georg Thieme Verlag Stuttgart, Bd. 4, 1991, oder in Römpp Lexikon Lacke und Druckfarben, Georg Thieme Verlag Stuttgart, 1998, Seiten 444 bis 446, beschrieben werden;
- Antioxidantien wie Hydrazine und Phosphorverbindungen
- UV-Absorber wie Triazine und Benztriphenol;
- Lichtschutzmittel wie HALS-Verbindungen, Benztriazole oder Oxalanilide;
- Verlaufmittel;
- Radikalfänger und Polymerisationsinhibitoren wie organische Phosphite oder 2,6 Di-tert-Butylphenol-Derivate;
- Slipadditive;
- Entschäumer;
- Emulgatoren, insbesondere nicht ionische Emulgatoren wie alkoxylierte Alkanole und Polyole, Phenole und Alkylphenole, anionische Emulgatoren wie Alkalisalze oder Ammoniumsalze von Alkancarbonsäuren, Alkansulfonsäuren und Sulfosäuren von alkoxylierten Alkanolen und Polyolen, Phenolen und Alkylphenolen;
- Netzmittel wie Siloxane, fluorhaltige Verbindungen, Carbonsäurehalbester, Phosphorsäureester, Polyacrylsäuren und deren Copolymere oder Polyurethane, wie sie beispielsweise im Detail in der Patentanmeldung DE 198 35 296 A 1 beschrieben werden, insbesondere in Verbindung mit den nachstehend beschriebenen assoziativen Verdickern auf Polyurethanbasis;
- Haftvermittler wie Tricyclodecandimethanol;
- filmbildende Hilfsmittel wie Cellulose-Derivate;
- Flammschutzmittel;
- Entlüftungsmittel wie Diazadicycloundecan oder Benzoin;
- Wasserrückhaltemittel;
- Rieselhilfen
- rheologiesteuernde Additive (Verdicker), wie die aus den Patentschriften WO 94/22968, EP-A-0 276 501, EP-A-0 249 201 oder WO 97/12945 bekannten; vemetzte polymere Mikroteilchen, wie sie beispielsweise in der EP-A-0 008 127 offenbart sind; anorganische Schichtsilikate wie Aluminium-Magnesium-Silikate, Natrium-Magnesium- und Natrium-Magnesium-Fluor-Lithium-Schichtsilikate des Montmorillonit-Typs; Kieselsäuren wie Aerosile; oder synthetische Polymere mit ionischen und/oder assoziativ wirkenden Gruppen wie Polyvinylalkohol, Poly(meth)acrylamid, Poly(meth)acrylsäure, Polyvinylpyrrolidon, Styrol-Maleinsäureanhydrid- oder Ethylen-Maleinsäureanhydrid-Copolymere und ihre Derivate oder Polyacrylate; oder assoziative Verdickungsmittel auf Polyurethanbasis, wie sie in Römpp Lexikon Lacke und Druckfarben, Georg Thieme Verlag, Stuttgart, New York, 1998, »Verdickungsmittel«, Seiten 599 bis 600, und in dem Lehrbuch »Lackadditive« von Johan Bieleman, Wiley-VCH, Weinheim, New York, 1998, Seiten 51 bis 59 und 65, beschrieben werden; insbesondere Kombinationen von ionischen und nicht ionischen Verdickern, wie sie in der Patentanmeldung DE 198 41 842 A 1 zu Einstellung eines strukturviskosen Verhaltens beschrieben werden, oder die Kombination von assoziativen Verdickern auf Polyurethanbasis und Netzmitteln auf Polyurethanbasis, wie sie in der deutschen Patentanmeldung DE 198 35 296 A 1 im Detail beschrieben wird;

Weitere Beispiele geeigneter Zusatzstoffe werden in dem Lehrbuch "Lackadditive" von Johan Bieleman, Wiley-VCH, Weinheim, New York, 1998, beschrieben. Sie werden in den üblichen und bekannten Mengen angewandt.

Die Herstellung der erfindungsgemäßen Pulverlacke weist keine methodischen Besonderheiten auf, sondern erfolgt, wie in der Produkt-Information der Firma BASF Lacke + Farben AG, "Pulverlacke", 1990, oder der Firmenschrift von BASF Coatings AG "Pulverlacke, Pulverlacke für industrielle Anwendungen", Januar 2000, beschrieben, durch Homogenisieren und Dispergieren, beispielsweise mittels eines Extruders oder Schneckenkneters, und Vermahlen der vorstehend beschriebenen Bestandteile. Nach Herstellung der erfindungsgemäßen Pulverlacke werden diese durch weiteres Vermahlen und ggf. durch Sichten und Sieben für die Applikation oder für die Dispergierung zum Zwecke der Herstellung der erfindungsgemäßen Pulverslurries vorbereitet.

Auch die Herstellung der erfindungsgemäßen Pulverslurries weist keine methodischen Besonderheiten auf, sondern erfolgt nach üblichen und bekannten Verfahren.

Die erfindungsgemäß hergestellten Pulverslurries können strukturviskos sein.

In einer ersten bevorzugten Variante erfolgt die Herstellung der erfindungsgemäßen Pulverslurries aus den vorstehend beschriebenen Bestandteilen im wesentlichen, wie in den Patentanmeldungen DE 195 40 977 A 1, DE 195 18 392 A 1, DE 196 17 086 A 1, DE-A-196 13 547, DE 196 18 657 A 1, DE 196 52 813 A 1, DE 196 17 086 A 1, DE-A-198 14 471 A 1, DE 198 41 842 A 1 oder DE 198 41 408 A 1 im Detail beschrieben, nur daß im Rahmen der vorliegenden Erfindung noch Effektpigmente mitverarbeitet werden. Hierbei wird der erfindungsgemäße Pulverlack durch Naßvermahlung oder durch Einrühren von trocken vermahlenem Pulverlack in Wasser oder ein wäßriges Medium in die erfindungsgemäße Pulverslurry überführt. Besonders bevorzugt wird die Naßvermahlung.

In einer weiteren bevorzugten Variante der Herstellung der erfindungsgemäßen Pulverslurries werden die vorstehend beschriebenen Bestandteile in einem organischen Lösemittel emulgiert, wodurch eine Emulsion vom Typ Öl-in-Wasser resultiert, hiernach wird das organische Lösemittel entfernt, wodurch sich die emulgierten Tröpfchen verfestigen und die erfindungsgemäße Pulverslurry resultiert. Ggf. kann sie noch naßvermahlen werden, um die Filtrierbarkeit zu verbessern.

In einer dritten bevorzugten Variante der Herstellung der erfindungsgemäßen Pulverslurries wird eine flüssige Schmelze der vorstehend beschriebenen Bestandteile zusammen mit den nicht aufgeschmolzenen Effektpigmenten in eine Emulgiervorrichtung vorzugsweise unter Zusatz von Wasser und Stabilisatoren gegeben, die erhaltene Emulsion abgekühlt und filtriert, wodurch die erfindungsgemäße Pulverslurry resultiert. Um eine hohe Mischgüte erzielen, ist es wesentlich, die Mischung lösemittelfrei in der Schmelze durchzuführen. Demgemäß werden die polymeren Bestandteile als viskose Harzschmelzen in die Dispergieraggregate eingespeist.

Die erfindungsgemäßen Pulverlacke und Pulverslurries dienen der Herstellung der erfindungsgemäßen Basislackierungen der erfindungsgemäßen effektgebenden Mehrschichtlackierungen auf einem Substrat.

Die erfindungsgemäße effektgebende Mehrschichtlackierung wird vor allem in der Automobillackierung, der Lackierung von Bauwerken im Innen- und Außenbereich, der Lackierung von Möbeln, Türen und Fenstern und der industriellen Lackierung, inklusive Coil Coating und Container Coating verwendet, wobei alle auf diesen technischen Gebieten üblichen und bekannten Substrate aus Metall, Kunststoff, Glas, Holz, Textil, Leder, Natur- und Kunststein, Beton, Zement oder Verbunden dieser Materialien in Betracht kommen, wobei die elektrisch leitfähigen Substrate bevorzugt sind.

Vorzugsweise ist die erfindungsgemäße effektgebende Mehrschichtlackierung herstellbar, indem man auf ein Substrat
(1) einen Füller auf eine kathodisch abgeschiedene und thermisch gehärtete Elektrotauchlackierung oder naß-in-naß auf eine kathodisch abgeschiedene, nicht oder nur partiell gehärtete Elektrotauchlackschicht appliziert, wonach man
(2) die resultiernde Füllerschicht für sich alleine thermisch oder thermisch und mit aktinischer Strahlung oder zusammen mit der Elektrotauchlackschicht thermisch oder thermisch und mit aktinischer Strahlung härtet, wodurch die Füllerlackierung oder Steinschlagschutzgrundierung resultiert,
(3) den erfindungsgemäßen Pulverlack oder die erfindungsgemäße Pulverslurry auf die Füllerlackierung oder Steinschlagschutzgrundierung appliziert, wodurch eine Pulverlackschicht oder Pulverslurryschicht resultiert,
(4) die Pulverlackschicht oder Pulverslurryschicht, ohne sie vollständig zu vernetzen, ablüftet oder trocknet, oder - alternativ - sie physikalisch oder thermisch und/oder mit aktinischer Strahlung härtet, wodurch die Basislackierung resultiert,
(5) mindestens einen Klarlack auf die Pulverlackschicht oder Pulverslurryschicht oder - alternativ - auf die Basislackierung appliziert, wonach man
(6) die Pulverlackschicht oder Pulverslurryschicht und die Klarlackschicht(en) gemeinsam thermisch oder thermisch und mit aktinischer Strahlung härtet, oder - alternativ - die Klarlackschicht für sich alleine thermisch und/oder mit aktinischer Strahlung härtet wodurch die Basislackierung und die Klarlackierung resultieren.

Beispiele geeigneter kathodischer Elektrotauchlacke sowie ggf. von Naß-in-naß-Verfahren werden in der japanischen Patentanmeldung 1975-142501 (japanische Offenlegungsschrift JP 52-065534 A 2, Chemical Abstracts Referat Nr. 87: 137427) oder den Patentschriften US 4,375,498 A 1, US 4,537,926 A 1, US 4,761,212 A 1, EP 0 529 335 A 1, DE 41 25 459 A 1, EP 0 595 186 A 1, EP 0 074 634 A 1, EP 0 505 445 A 1, DE 42 35 778 A 1, EP 0 646 420 A 1, EP 0 639 660 A 1, EP 0 817 648 A 1, DE 195 12 017 C 1, EP 0 192 113 A 2, DE 41 26 476 A 1 oder WO 98/07794 beschrieben.

Beispiele geeigneter Füller, insbesondere wäßriger Füller, die auch als Steinschlagschutzgrundierungen oder Funktionsschichten bezeichnet werden, werden in den Patentschriften US 4,537,926 A 1, EP 0 529 335 A 1, EP 0 595 186 A 1, EP 0 639 660 A 1, DE 44 38 504 A 1, DE 43 37 961 A 1, WO 89/10387, US 4,450,200 A 1, US 4,614,683 A 1 oder WO 490/26827 beschrieben.

Als Klarlacke kommen alle üblichen und bekannten Klarlacke in Betracht.

Beispiele geeigneter Klarlacke sind:
- thermisch härtbare Einkomponenten(1K)-, Zweikomponenten(2K)- oder Mehrkomponenten(3K, 4K)-Klarlacke, wie sie deutschen Patentanmeldung DE 42 04 518 A 1, den europäischen Patentanmeldungen EP 0 594 068 A 1, EP 0 594 071 A 1, E 0 594 142 A 1, EP 0 604 992 A 1 oder EP 0 596 460 A 1 den internationalen Patentanmeldungen WO 94/10211, WO 94/10212, WO 94/10213, WO 94/22969 oder WO 92/22615 oder den amerikanischen Patentschriften US 5,474,811 A 1, US 5,356,669 A 1 oder US 5,605,965 A 1 beschrieben werden;
- Thermisch härtbare Pulverklarlacke, wie sie beispielsweise aus der deutschen Patentanmeldung DE 42 22 194 A 1 oder der Produkt-Information der Firma BASF Lacke + Farben AG, "Pulverlacke", 1990 bekannt sind;
- Thermisch und/oder mit aktinischer Strahlung härtbare Pulverslurry-Klarlacke, wie sie beispielsweise in den US-Patentschrift US 4,268,542 A 1 oder US 5,379,947 A 1 und den Patentanmeldungen DE 27 10 421 A 1, DE 195 40 977 A 1, DE 195 18 392 A 1, DE 196 17 086 A 1, DE 196 13 547 A 1, DE 196 18 657 A 1, DE 196 52 813 A 1, DE 196 17 086 A 1, DE 198 14 471 A 1, DE 198 41 842 A 1 oder DE 198 41 408 A 1 oder den nicht vorveröffentlichten deutschen Patentanmeldungen DE 199 08 018.6 oder DE 199 08 013.5 beschrieben werden; oder
- UV-härtbare Klarlacke und Pulverklarlacke, wie sie beispielsweise aus den europäischen Patentanmeldungen EP 0 928 800 A 1, EP 0 636 669 A 1, EP 0 410 242 A 1, EP 0 783 534 A 1, EP 0 650 978 A 1, EP 0 650 979 A 1, EP 0 650 985 A 1, EP 0 540 884 A 1, EP 0 568 967 A 1, EP 0 054 505 A 1 oder EP 0 002 866 A 1, den deutschen Patentanmeldungen DE 197 09 467 A 1, DE 42 03 278 A 1, 33 16 593 A 1, DE 38 36 370 A 1, DE 24 36 186 A 1 oder DE 20 03 579 B 1, den internationalen Patentanmeldungen WO 97/46549 oder WO 99/14254 oder den amerikanischen Patentschriften US 5,824,373 A 1, US 4,675,234 A 1, US 4,634,602 A 1, US 4,424,252 A 1, US 4,208,313 A 1, US 4,163,810 A 1, US 4,129,488 A1, US 4;064,161 A 1 oder US 3,974,303 A 1 hervorgehen. Des weiteren sind Pulverlacke bekannt, die thermisch und mit aktinischer Strahlung vernetzt werden können (vgl. die europäische Patentanmeldung EP 0 844 286 A).

Die resultierenden Klarlackierungen können noch mit einer kratzfesten Beschichtung aus einem organisch modifizierten Keramikmaterial, wie es beispielsweise unter der Marke ORMOCER® im Handel ist, beschichtet werden.

Im allgmeinen werden die erfindungsgemäß zu verwendenden Beschichtungsstoffe in einer Naßschichtdicke appliziert, daß nach ihrer Aushärtung Beschichtungen mit der für ihre Funktionen notwendigen und vorteilhaften Schichtdicken resultieren. Im Falle der Elektrotauchlackierung liegen sie bei 5 bis 40, vorzugweise 10 bis 35, besonders bevorzugt 12 bis 30 und insbesondere 15 bis 25 µm, in Falle der Füllerlackierung, Steinschlagschutzgrundierung oder Funktionsschicht liegen sie bei 10 bis 60, vorzugsweise 12 bis 55, besonders bevorzugt 15 bis 50 und insbesondere 18 bis 45 µm, im Falle der Basislackierung liegen sie bei 5 bis 50, vorzugsweise 5 bis 40, besonders bevorzugt 5 bis 30 und insbesondere 10 bis 25 µm, und im Falle einer Klarlackierung liegen sie bei 10 bis 100, vorzugsweise 15 bis 80, besonders bevorzugt 20 bis 75 und insbesondere 25 bis 70 µm. Indes kann in der erfindungsgemäßen Mehrschichtlackierung die Funktionsschicht nur eine Schichtdicke von 20 bis 50% der Gesamtschichtdicke von Funktionsschicht und Basislackierung haben.

Darüber hinaus dienen die erfindungsgemäßen Pulverslurries auch noch der Herstellung der erfindungsgemäßen Kombinationseffektschichten.

Im Rahmen der vorliegenden Erfindung sind hierunter Lackierungen zu verstehen, die in einer effektgebenden Mehrschichtlackierung mindestens zwei Funktionen erfüllt. Funktionen dieser Art sind insbesondere der Schutz vor Korrosion, die Haftvermittlung, die Absorption mechanischer Energie und die Effektgebung. Erfindungsgemäß dient die Kombinationseffektschicht vor allem der Absorption mechanischer Energie sowie der Effektgebung zugleich; sie erfüllt also die Funktionen einer Füllerlackierung oder Steinschlagschutzgrundierung und einer Basislackierung. Vorzugsweise hat die Kombinationseffektschicht darüber hinaus noch Korrosionsschutzwirkung und/oder haftvermittelnde Wirkung.

Die Dicke der Kombinationseffektschicht ist innerhalb einer gegebenen erfindungsgemäßen effektgebenden Mehrschichtlackierung vorzugsweise konstant. In manchen Fällen kann es sich indes empfehlen, die Dicke in den Bereichen des Substrats, die einer mechanischen Einwirkung weniger stark ausgesetzt und/oder weniger oder gar nicht sichtbar sind, dünner zu gestalten, um Material einzusparen.

Selbstverständlich kann die Dicke der Kombinationseffektschicht von erfindungsgemäßer effektgebender Mehrschichtlackierung zu erfindungsgemäßer effektgebender Mehrschichtlackierung sehr breit variieren. Hierbei richtet sich die für den jeweiligen Einzelfall optimale Dicke insbesondere nach dem Deckvermögen der eingesetzten Pigmente (vgl. Römpp Lexikon Lacke und Druckfarben, Georg Thieme Verlag, Stuttgart, New York, 1998, Seite 124, "Deckvermögen"), der Fähigkeit, mechanische Energie zu absorbieren bzw. zu dissipieren, der Fähigkeit, die Unebenheiten der Substratoberfläche auszugleichen, und/oder den jeweils angewandten sonstigen Bestandteilen der Pulverslurry. Der Fachmann kann daher die optimale Dicke anhand seines allgemeinen Fachwissens ggf. unter Zuhilfenahme einfacher orientierender Vorversuche ermitteln. Vorzugsweise liegt die Dicke der Kombinationseffektschicht bei 10 bis 100, bevorzugt 15 bis 90, besonders bevorzugt 20 bis 80, ganz besonders bevorzugt 25 bis 70 und insbesondere 30 bis 60µm, jeweils bezogen auf die Schicht.

Zur Herstellung der erfindungswesentlichen Kombinationseffektschicht werden nach dem erfindungsgemäßen Verfahren die vorstehend beschriebenen erfindungsgemäßen Pulverslurries auf die vorstehend beschriebenen grundierten und ungrundierten Substrate appliziert.

Zwar kommen die erfindungsgemäßen Pulverslurries auch für die Anwendung außerhalb der Automobollackierung in Betracht, indes liegt ihr hauptsächlicher technischer Verwendungszweck auf dem besagten Gebiet, weil hier ihre besonderen Vorteile ganz besonders offen zu Tage treten. Bei den Substraten handelt es sich somit um Kraftfahrzeugkarosserien, insbesondere PKW-Karosserien, sowie Teilen hiervon, wie beispielsweise Türen, Motorhauben, Kotflügel, Kofferraumdeckel Spoiler, Schweller oder Windabweiser.

Diese bestehen insbesondere aus Stahl oder Aluminium. Die Metalloberflächen könnnen hierbei Grundierungen aufweisen. Im Falle von Aluminium kann es sich beispielsweise um eine durch anodische Oxidation erzeugte Oxidschicht handeln (Eloxal®-Verfahren). Im Falle von Stahl handelt es sich üblicherweise um eine kathodisch abgeschiedene und thermisch gehärtete Elektrotauchlackierung. Es kann aber auch eine kathodisch abgeschiedene Elektrotauchlackschicht verwendet werden, die nicht thermisch gehärtet, sondern lediglich getrocknet oder partiell gehärtet ist.

Die Elektrotauchlackierung oder die Elektrotauchlackschicht wird dann mit der erfindungsgemäßen Pulverslurry überschichtet, die entweder für sich alleine oder gemeinsam mit der Elektrotauchlackschicht gehärtet wird (Naß-in-naß-Verfahren).

Die resultierende erfindungsgemäße Kombinationseffektschicht kann mit mindestens einer zusätzlichen Lackierung beschichtet werden. Vorzugsweise handelt es sich dabei um mindestens eine der vorstehend beschriebenen Klarlackierungen. Hierdurch resultieren besonders vorteilhafte erfindungsgemäße effektgebende Mehrschichtlackierungen mit einem hervorragenden optischen Gesamteindruck und einer besonders hohen Kratzfestigkeit.

Bei der Beschichtung der Kombinationseffektschicht mit einem Klarlack kann die ausgehärtete Kombinationseffektschicht mit mindestens einer Klarlackschicht überschichtet werden, wonach diese für sich alleine gehärtet wird.

In einer zweiten Variante, die erfindungsgemäß bevorzugt ist, kann die nicht oder nur partiell ausgehärtete pigmentierte Pulverslurry-Schicht direkt mit mindestens einer Klarlackschicht überschichtet werden, wonach die Klarlackschicht(en) gemeinsam mit der pigmentierten Pulverslurry-Schicht sowie ggf. der Elektrotauchlackschicht ausgehärtet wird (Naß-in-naß-Verfahren).

Die erfindungsgemäßen Pulverslurries lassen sich mit den aus der Flüssiglacktechnologie bekannten Methoden aufbringen. Insbesondere können sie mittels Spritzverfahren aufgebracht werden. Vorzugsweise werden sie durch elektrostatische Lackierung der Karosserieaußenteile, gefolgt von pneumatischem Spritzen (Druckluftspritzen) der Karosserieinnenteile appliziert.

Dabei kann die elektrostatische Lackierung mittels eines elektrostatischen Sprühspalts, einer elektrostatischen Sprühglocke oder einer elektrostatischen Sprühscheibe erfolgen.

Des weiteren kann die elektrostatische Lackierung durch Elektrostatikunterstützte mechanische Zerstäubung erfolgen. Vorzugsweise wird diese mit Hilfe von elektrostatischen Hochrotationsscheiben oder Hochrotationsglocken durchgeführt.

Auch das pneumatische Spritzen oder Druckluftlackieren weist keine methodischen Besonderheiten auf, sondern kann per Hand oder mit Hilfe von üblichen und bekannten Lackierautomaten oder-robotern durchgeführt werden.

Ergänzend wird hierzu auf Römpp Lexikon Lacke und Druckfarben, Georg Thieme Verlag, Stuttgart, New York, 1998, Seite 186: »Elektrostatische Lackierung«, Seite 187: »Elektrostatische Sprühpistolen«, »Elektrostatisches Sprühen«, sowie Seite 165: »Druckluftspritzen«, verwiesen.

Bevorzugt wird die Applikation bei Beleuchtung mit sichtbarem Licht einer Wellenlänge von über 550 µm oder unter Lichtausschluß durchgeführt, wenn die pigmentierten Pulverslurries thermisch und mit aktinischer Strahlung härtbar sind. Hierdurch werden eine stoffliche Änderung oder Schädigung des erfindungsgemäß zu verwendenden Beschichtungsstoffs und des Overspray vermieden.

Selbstverständlich können diese Applikationsverfahren auch bei der Applikation zusätzlicher Lackschichten, vorzugsweise Klarlackschichten, angewandt werden, sofern es sich nicht um Pulverlacke, insbesondere um Pulverklarlacke und/oder die erfindungsgemäßen Pulverlacke, handelt, die vorzugsweise nach den in der Produkt-Information der Firma BASF Lacke + Farben AG, "Pulverlacke", 1990 oder der Firmenschrift von BASF Coatings AG "Pulverlacke, Pulverlacke für industrielle Anwendungen", Januar 2000, beschriebenen Verfahren verarbeitet werden.

Die Härtung der applizierten Elektrotauchlackschichten, Füllerschichten, Basislackschichten, Kombinationseffektschichten und Klarlackschichten weist keine methodischen Besonderheiten auf, sondern erfogt mit Hilfe der üblichen und bekannten Verfahren und Vorrichtungen.

Bei der physikalischen Härtung müssen an und für sich keine besonderen Maßnahmen ergriffen werden; indes kann die physikalische Härtung durch durch Luftsauerstoff, Hitze oder durch Bestrahlen mit aktinischer Strahlung unterstützt werden.

Die thermische Härtung kann nach einer gewissen Ruhezeit oder Ablüftzeit erfolgen. Sie kann eine Dauer von 30 s bis 2 h, vorzugsweise 1 min bis 1 h und insbesondere 1 min bis 45 min haben. Die Ruhezeit dient beispielsweise zum Verlauf und zur Entgasung der Schichten und zum Verdunsten von flüchtigen Bestandteilen wie gegebenenfalls noch vorhandenem Lösemittel und/oder Wasser. Die Ablüftung kann durch eine erhöhte Temperatur, die zu einer Härtung noch nicht ausreicht, und/oder durch eine reduzierte Luftfeuchtigkeit beschleunigt werden.

Die thermische Härtung erfolgt beispielsweise durch Erhitzen in einem Umluftofen oder Bestrahlen mit IR- und/oder NIR-Lampen. Wie bei der Härtung mit aktinischer Strahlung kann auch die thermische Härtung stufenweise erfolgen. Vorteilhafterweise erfolgt die thermische Härtung bei Temperaturen von 100 bis 180 °C.

Vorzugsweise wird bei der Härtung mit aktinischer Strahlung eine Dosis von 1.000 bis 3.000, bevorzugt 1.100 bis 2.900, besonders bevorzugt 1.200 bis 2.800, ganz besonders bevorzugt 1.300 bis 2.700 und insbesondere 1.400 bis 2.600 mJ/cm² angewandt. Gegebenenfalls kann diese Härtung mit aktinischer Strahlung von anderen Strahlenquellen ergänzt werden. Im Falle von Elektronenstrahlen wird vorzugsweise unter Inertgasatmosphäre gearbeitet. Dies kann beispielsweise durch Zuführen von Kohlendioxid und/oder Stickstoff direkt an die Oberfläche der Pulverslurry-Schicht gewährleistet werden. Auch im Falle der Härtung mit UV-Strahlung kann, um die Bildung von Ozon zu vermeiden, unter Inertgas gearbeitet werden.

Für die Härtung mit aktinischer Strahlung werden die üblichen und bekannten Strahlenquellen und optischen Hilfsmaßnahmen angewandt. Beispiele geeigneter Strahlenquellen sind Blitzlampen der Firma VISIT, Quecksilberhoch- oder - niederdruckdampflampen, welche gegebenenfalls mit Blei dotiert sind, um ein Strahlenfenster bis zu 405 nm zu öffnen, oder Elektronenstrahlquellen. Deren Anordnung ist im Prinzip bekannt und kann den Gegebenheiten des Werkstücks und der Verfahrensparameter angepaßt werden. Bei kompliziert geformten Werkstücken, wie sie für Automobilkarosserien vorgesehen sind, können die nicht direkter Strahlung zugänglichen Bereiche (Schattenbereiche) wie Hohlräume, Falzen und anderen konstruktionsbedingte Hinterschneidungen mit Punkt-, Kleinflächen- oder Rundumstrahlern, verbunden mit einer automatischen Bewegungseinrichtung für das Bestrahlen von Hohlräumen oder Kanten, (partiell) ausgehärtet werden.

Die Anlagen und Bedingungen dieser Härtungsmethoden werden beispielsweise in R. Holmes, U.V. and E.B. Curing Formulations for Printing Inks, Coatings and Paints, SITA Technology, Academic Press, London, United Kindom 1984, beschrieben.

Hierbei kann die Aushärtung stufenweise erfolgen, d. h. durch mehrfache Belichtung oder Bestrahlung mit aktinischer Strahlung. Dies kann auch alternierend erfolgen, d. h., daß abwechselnd mit UV-Strahlung und Elektronenstrahlung gehärtet wird.

Bei Dual Cure können thermische Härtung und Härtung mit aktinischer Strahlung gleichzeitig oder nacheinander angewandt werden. Werden die beiden Härtungsmetboden nacheinander verwendet, kann beispielsweise mit der thermischen Härtung begonnen und mit der Härtung mit aktinischer Strahlung geendet werden. In anderen Fällen kann es sich als vorteilhaft erweisen, mit der Härtung mit aktinischer Strahlung zu beginnen und hiermit zu enden.

Insgesamt bieten die erfindungsgemäßen Verfahren zur Herstellung der erfindungsgemäßen effektgebenden Mehrschichtlackierungen die ökologisch und wirtschaftlich ganz besonders vorteilhafte und bedeutsame Möglichkeit nicht nur Lackierungen auf rein wäßriger Basis ohne Emission flüchtiger organischer Stoffe zu verwirklichen, sondern dies auch mit einer reduzierten Anzahl von Schichten. Wenn die entsprechenden lösemittelfreien Klarlacke angewandt werden, gilt dies auch für die erfindungsgemäßen effektgebenden Mehrschichtlackierungen, die mindestens eine Klarlackierung enthalten.

Die in erfindungsgemäßer Verfahrensweise erhaltenen erfindungsgemäßen effektgebenden Mehrschichtlackierungen zeichnen sich durch eine sehr gute Haftung auf dem Substrat, eine sehr gute Zwischenschichthaftung, eine hervorragende Korrosionsschutzwirkung, eine sehr gute Schutzwirkung gegen Steinschlag und andere mechanische Schädigungen, einen sehr guten Verlauf und einen sehr guten optischen Gesamteindruck, insbesondere was Farbtiefe, Metalliceffekt, dichroitischer Effekt und D.O.I. (Distinctiveness of the reflected image) betrifft, aus.

Die entsprechend beschichteten erfindungsgemäßen Karosserien vermitteln daher einen besonders hohen ästhetischen Gesamteindruck und haben eine besonders lange Gebrauchsdauer.

### Beispiele

### Beispiel 1

### Die Herstellung einer erfindungsgemäßen effektgebenden Mehrschichtlackierung mit Hilfe einer erfindungsgemäßer Pulverslurry

Für das Beispiel 1 wurde, wie in der deutschen Patentanmeldung DE 196 13 547 A 1 beschrieben, zunächst ein Pulverlack aus 77,4 Gewichtsteilen eines Methacrylatcopolymerisats aus Methylmethacrylat, Glydidylmethacrylat, n-Butylacrylat und Styrol, 19,4 Gewichtsteilen Dodecandisäure, 2 Gewichtsteilen eines handelsüblichen UV-Absorbers (Ciba® CGL 1545), 1 Gewichtsteil des handelsüblichen Lichtschutzmittels Tinuvin® 123 und 0,25 Gewichtsteilen des handelsüblichen Oxidationsschutzmittels Irgafos® PEPQ hergestellt.

Dieser Pulverlack wurde nach der in der deutschen Patentanmeldung DE 196 18 657 A 1, Spalte 6, angegebenen Versuchsvorschrift in Wasser dispergiert, so daß eine pigmentierte Pulverslurry resultierte.

Die Tabelle 1 gibt einen Überblick über die Art und Menge der hierbei verwendeten Bestandteile.

**Tabelle 1:**

| **Die Herstellung der erfindungsgemäßen Pulverslurry** | |
|---|---|
| **Bestandteil** | **Gewichtsteile Beispiel 1** |
| **Vordispergat:** | |
| VE-Wasser ^{a)} | 42 |
| Disperse Aid W22 ^{b)} | 1,03 |
| Triton X100 ^{c)} | 0,02 |
| Dimethylethanolamin | 0,08 |
| RM 8 ^{d)} | 0,9 |
| Pulverlack | 28 |

| **Komplettierung:** | |
|---|---|
| VE-Wasser ^{a)} | 17,49 |
| RM 8 ^{d)} | 0,7 |
| Byk 333 ^{e)} | 0,05 |
| Triton X100 ^{c)} | 0,18 |
| **Effektpigment** ^{**f)**} | **5,0** |

| | |
|---|---|
| a) vollentsalztes Wasser; | |
| b) Dispergiermittel auf Polyurethanbasis der Firma Daniel Products; | |
| c) Entschäumer der Firma Union Carbide; | |
| d) Verdicker auf Polyurethanbasis der Firma Rohm & Haas; | |
| e) Verlaufmittel der Firma Byk Chemie; | |
| **f) Aluminiumeffektpigment der Firma Eckhart, beschichtet nach dem Dry-Blend-Verfahren mit dem Polypropylenglykol Pluriol® 600 der Firma BASF Aktiengesellschaft im Gewichtsverhältnis AJuminiumeffektpigment : Pluriol = 99,6 : 0,4.** | |

Stahltafeln (Karosseriebleche), die mit einer üblichen und bekannten kathodisch abgeschiedenen und eingebrannten Elektrotauchlackierung beschichtet waren, wurden mit der Pulverslurry mit Hilfe einer üblichen und bekannten Spritzpistole manuell beschichtet (Druck: 5 bar; 2 Spritzgänge, horizontal und vertikal). Die Naßschichtdicke wurde dabei so gewählt, daß nach dem Einbrennen eine Schichtdicke von 40 µm resultierte. Die Pulverslurryschicht wurden während 10 min bei 50°C abgelüftet und mit einem handelsüblichen konventionellen Zweikomponentenklarlack der Firma BASF Coatings AG überschichtet. Die resultierende Klarlackschicht wurde während 10 min abgelüftet, wonach die Pulverslurryschicht und die Klarlackschicht während 30 min bei 150°C eingebrannt wurden. Die Dicke der Klarlackierung lag bei 50 µm.

Die resultierenden Lackierung wies ein hervorragendes Deckvermögen auf. Ihr Metalliceffekt und Flip-Flop entsprachen in vollem Umfang denjenigen einer entsprechend pigmentierten Basislackierung. Die Haftung auf der Grundierung und die Zwischenschichthaftung sowie die Steinschlagschutzwirkung waren auch nach der Bewitterung im Schwitzwasserkonstantklima (SKK) sehr gut. Störungen im Verlauf, Kocher, Rißbildung (mud-cracking) oder Oberflächenstrukturen wie Orangenschalenhaut waren nicht zu beobachten.

### Beispiel 2

### Die Herstellung einer erfindungsgemäßen effektgebenden Mehrschichtlackierung mit Hilfe eines erfindungsgemäßen Pulverlacks

Für das Beispiel 2 wurden der Pulverlack gemäß Beispiel 1 hergestellt, nur daß 5,5 Gewichtsteile des beschichteten Aluminiumeffektpigments gemäß der Tabelle 1 zugesetzt wurden.

Hierzu wurden die im Beispiel 1 aufgeführten Bestandteile des Pulverlacks und das beschichtete Aliminiumeffekfipigment eingewogen. Die Ansatzgröße lag bei 5,0 kg. Die Bestandteile wurden in einem Henschel-Fluidmischer während zwei Minuten bei 2.800 U/min homogenisiert. Die resultierende Mischung wurde nach der Vormischung mittels eines Trichters einem Extruder zugeführt (BUSS PR 46). Der Extruder wurde jeweils mit 110°C Manteltemperatur angefahren, und die Drehzahl wurde so gewählt, daß die Manteltemperatur sich bei 60°C hielt. Das austretende Extrudat wurde mit einer Kühlwalze auf 20 °C abgekühlt und mit einem Brecher zu Chips zerkleinert. Die Chips wurden vorgeschnitten und in einer Stiftmühle vermahlen. Das resultierende Pulver wurde mit einem Taumelsieb über 125µm abgesiebt.

Die Applikation des Pulverlacks des Beispiels 2 erfolgte mit Hilfe einer Laborhandpistole mit Corona-Aufladung vom Typ Wagner ESB in einer Schichtstärke von 40 bis 50 µm auf Stahltafeln, die mit einer üblichen und bekannten kathodisch abgeschiedenen und eingebrannten Elektrotauchlackierung und einer üblichen und bekannten Steinschlagschutzgrundierung beschichtet waren. Die resultierenden Pulverlackschichten wurden während 10 - 25 Minuten bei 160 - 180 °C eingebrannt.

Die so erhaltene Basislackierung wurde mit einem handelsüblichen Zweikomponenten-Klarlack überschichtet, wonach die resultierende Klarlackschicht bei 60°C ausgehärtet wurde.

Die effektgebende Mehrschichtlackierung wies einen sehr guten Verlauf und optischen Gesamteindruck auf. Insgesamt wurden die gleichen Vorteile erhalten, wie bei der effektgebenden Mehrschichtlackierung des Beispiels 1.

## Patentansprüche

1. Pulverlacke und Pulverlackdispersionen (Pulverslurries), enthaltend mindestens ein hydrophiles Effektpigment.

2. Pulverlacke und Pulverslurries nach Anspruch 1, **dadurch gekennzeichnet, daß** sie als Effektpigment ein Metalleffektpigment enthalten.

3. Pulverlacke und Pulverslurries nach Anspruch 2, **dadurch gekennzeichnet, daß** sie als Metalleffektpigment ein Aluminiumpigment enthalten.

4. Pulverlacke und Pulverslurries nach einem der Ansprüche 1 bis 3, **dadurch gekennzeichnet, daß** die Effektpigmente mit mindestens einem grenzflächenaktiven Stoff beschichtet sind.

5. Pulverlacke und Pulverslurries nach Anspruch 4, **dadurch gekennzeichnet, daß** als grenzflächenaktive Stoffe Tenside verwendet werden.

6. Pulverlacke und Pulverslurries nach Anspruch 5, **dadurch gekennzeichnet, daß** als Tenside Neotenside verwendet werden.

7. Pulverlacke und Pulverslurries nach Anspruch 6, **dadurch gekennzeichnet, daß** als Neotenside Polyalkylenglykole verwendet werden.

8. Pulverlacke und Pulverslurries nach Anspruch 7, **dadurch gekennzeichnet, daß** als Polyalkylenglykole Polypropopylenglykole verwendet werden.

9. Pulverlacke und Pulverslurries nach Anspruch 8, **dadurch gekennzeichnet, daß** das zahlenmittlere Molekulargewicht des Polypropopylenglykols bei 350 bis 1.000 Dalton liegt.

10. Pulverlacke und Pulverslurries nach einem der Ansprüche 1 bis 9, **dadurch gekennzeichnet, daß** sie physikalisch oder thermisch und/oder mit aktinischer Strahlung härtbar sind.

11. Pulverlacke und Pulverslurries nach einem der Ansprüche 1 bis 10, **dadurch gekennzeichnet, daß** sie frei von organischen Lösemitteln sind.

12. Pulverlacke und Pulverslurries nach einem der Ansprüche 1 bis 11, **dadurch gekennzeichnet, daß** in den Pulverlacken und den Pulverslurries die Gesamtmenge der beschichteten Effektpigmente in den Pulverlackteilchen, als separate feste Phase oder zum Teil in den Pulverlackteilchen und zum Teil als separate feste Phase vorliegt.

13. Pulverslurries nach einem der Ansprüche 1 bis 12, **dadurch gekennzeichnet, daß** sie strukturviskos sind.

14. Verwendung der Pulverlacke nach einem der Ansprüche 1 bis 12 und der Pulverslurries nach einem der Ansprüche 1 bis 13 zur Herstellung von Basislackierungen oder Kombinationseffektschichten in effektgebenden Mehrschichtlackierungen.

15. Effektgebende Mehrschichtlackierung mit einer Kombinationseffektschicht, herstellbar, indem man eine Pulverslurry gemäß einem der Ansprüche 1 bis 13 auf eine kathodisch abgeschiedene und thermisch gehärtete Elektrotauchlackierung oder naß-in-naß auf eine kathodisch abgeschiedene, nicht oder nur partiell gehärtete Elektrotauchlackschicht appliziert, wonach die resultiernde Pulverslurryschicht für sich alleine physikalisch oder thermisch und/oder mit aktinischer Strahlung oder zusammen mit der Elektrotauchlackschicht thermisch oder thermisch und mit aktinischer Strahlung gehärtet wird, wodurch die Kombinationseffektschicht resultiert.

16. Effektgebende Mehrschichtlackierung nach Anspruch 15, **dadurch gekennzeichnet, daß** man entweder die Pulverslurryschicht oder die Kombinationseffektschicht mit mindestens einem Klarlack überschichtet, wonach die resultierende Klarlackschicht
(1) für sich alleine thermisch und/oder mit aktinischer Strahlung,
(2) zusammen mit der Pulverslurryschicht thermisch und/oder mit aktinischer Strahlung oder
(3) zusammen mit der Elektrotauchlackschicht und der Pulverslurryschicht thermisch oder thermisch und mit aktinischer Strahlung
gehärtet wird.

17. Effektgebende Mehrschichtlackierung mit einer Basislackierung, herstellbar, indem man
(1) einen Füller auf eine kathodisch abgeschiedene und thermisch gehärtete Elektrotauchlackierung oder naß-in-naß auf eine kathodisch abgeschiedene, nicht oder nur partiell gehärtete Elektrotauchlackschicht appliziert, wonach man
(2) die resultiernde Füllerschicht für sich alleine thermisch oder thermisch und mit aktinischer Strahlung oder zusammen mit der Elektrotauchlackschicht thermisch oder thermisch und mit aktinischer Strahlung härtet, wodurch die Füllerlackierung oder Steinschlagschutzgrundierung resultiert,
(3) einen Pulverlack oder eine Pulverslurry auf die Füllerlackierung oder Steinschlagschutzgrundierung appliziert, wodurch eine Pulverlackschicht oder Pulverslurryschicht resultiert,
(4) die Pulverlackschicht oder Pulverslurryschicht, ohne sie vollständig zu vernetzen, ablüftet oder trocknet, oder - alternativ - sie physikalisch oder thermisch und/oder mit aktinischer Strahlung härtet, wodurch die Basislackierung resultiert,
(5) mindestens einen Klarlack auf die Pulverlackschicht oder Pulverslurryschicht oder - alternativ - auf die Basislackierung appliziert, wonach man
(6) die Pulverlackschicht oder Pulverslurryschicht und die Klarlackschicht(en) gemeinsam thermisch und/oder mit aktinischer Strahlung härtet, oder - alternativ - die Klarlackschicht für sich alleine thermisch und/oder mit aktinischer Strahlung härtet wodurch die Basislackierung und die Klarlackierung resultieren,
**dadurch gekennzeichnet, daß** man einen Pulverlack gemäß einem der Ansprüche 1 bis 12 oder eine Pulverslurry gemäß einem der Ansprüche 1 bis 13 verwendet.

## Claims

1. Powder coating materials or powder coating dispersions (powder slurries) comprising at least one hydrophilic effect pigment.

2. Coating materials or slurries according to Claim 1, **characterized in that** it comprises as effect pigment a metal effect pigment.

3. Coating materials or slurries according to Claim 2, **characterized in that** it comprises as metal effect pigment an aluminium pigment.

4. Coating materials or slurries according to any of Claims 1 to 3, **characterized in that** the effect pigments are coated with at least one surface-active substance.

5. Coating materials or slurries according to Claim 4, **characterized in that** the surface-active substances used comprise surfactants.

6. Coating materials or slurries according to Claim 5, **characterized in that** the surfactants used comprise nonionic surfactants.

7. Coating materials or slurries according to Claim 6, **characterized in that** the nonionic surfactants used comprise polyalkylene glycols.

8. Coating materials or slurries according to Claim 7, **characterized in that** the polyalkylene glycols used comprise polypropopylene glycols.

9. Coating materials or slurries according to Claim 8, **characterized in that** the number-average molecular weight of the polypropopylene glycol is from 350 to 1000 daltons.

10. Coating materials or slurries according to any of Claims 1 to 9, **characterized in that** it is curable physically or thermally and/or with actinic radiation.

11. Coating materials or slurries according to any of Claims 1 to 10, **characterized in that** it is free from organic solvents.

12. Coating materials or slurries according to any of Claims 1 to 11, **characterized in that** in the coating materials and in the slurries the totality of the coated effect pigments is present in the powder coating particles, as a separate solid phase, or partly in the powder coating particles and partly as a separate solid phase.

13. Slurries according to any of Claims 1 to 12, **characterized in that** it is pseudoplastic.

14. Use of the powder coating materials according to any of Claims 1 to 12 or of the powder slurries according to any of Claims 1 to 13 to produce basecoats or combination effect coats in multicoat effect coating systems.

15. Multicoat effect coating system comprising a combination effect coat, preparable by applying a powder slurries according to any of Claims 1 to 13 to a cathodically deposited and thermally cured electrodeposition coat or wet-on-wet to a cathodically deposited, uncured or only part-cured electrodeposition coating film, and then curing the resultant powder slurries film, on its own, physically or thermally and/or with actinic radiation, or curing it together with the electrodeposition coating film, thermally or thermally and with actinic radiation, to give the combination effect coat.

16. Multicoat effect coating system according to Claim 15, **characterized in that** either the powder slurries film or the combination effect coat is overcoated with at least one clearcoat material, after which the resulting clearcoat film is cured
(1) on its own, thermally and/or with actinic radiation,
(2) together with the powder slurries film, thermally and/or with actinic radiation, or
(3) together with the electrodeposition coating film and the powder slurries film, thermally or thermally and with actinic radiation.

17. Multicoat effect coating system comprising a basecoat, preparable by
(1) applying a surfacer to a cathodically deposited and thermally cured electrodeposition coat or wet-on-wet to a cathodically deposited, uncured or only part-cured electrodeposition coating film, and then
(2) curing the resultant surfacer film, on its own, thermally, or thermally and with actinic radiation, or curing it together with the electrodeposition coating film, thermally, or thermally and with actinic radiation, to give the surfacer coat or antistonechip primer,
(3) applying a powder coating material or powder slurries to the surfacer coat or antistonechip primer, to give a powder coating film or powder slurries film,
(4) flashing off or drying the powder coating film or powder slurries film without crosslinking it completely, or - alternatively - curing it physically or thermally and/or with actinic radiation, to give the basecoat,
(5) applying at least one clearcoat material to the powder coating film or powder slurries film or - alternatively - to the basecoat, and then
(6) curing the powder coating film or powder slurries film and the clearcoat film(s) together, thermally and/or with actinic radiation, or - alternatively - curing the clearcoat film on its own thermally and/or with actinic radiation, to give the basecoat and the clearcoat,
**characterized in that** a powder coating material according to any of Claims 1 to 12 or a powder slurry according to any of Claims 1 to 13 is used.

## Revendications

1. Laques en poudre et dispersions de laque en poudre (suspensions de poudre), contenant au moins un pigment à effet hydrophile.

2. Laques en poudre et suspensions de poudre suivant la revendication 1, **caractérisées en ce qu'**elles contiennent un pigment à effet métallique comme pigment à effet.

3. Laques en poudre et suspensions de poudre suivant la revendication 2, **caractérisées en ce qu'**elles contiennent un pigment d'aluminium, comme pigment à effet métallique.

4. Laques en poudre et suspensions de poudre suivant l'une des revendications 1 à 3, **caractérisées en ce que** les pigments à effet sont enduits d'au moins un agent de surface.

5. Laques en poudre et suspensions de poudre suivant la revendication 4, **caractérisées en ce que**, comme agents de surface, on utilise des agents tensioactifs.

6. Laques en poudre et suspensions de poudre suivant la revendication 5, **caractérisées en ce que**, comme agents tensioactifs, on utilise des agents tensioactifs non ioniques.

7. Laques en poudre et suspensions de poudre suivant la revendication 6, **caractérisées en ce que**, comme agents tensioactifs non ioniques, on utilise des polyalkylèneglycols.

8. Laques en poudre et suspensions de poudre suivant la revendication 7, **caractérisées en ce que**, comme polyalkylèneglycols, on utilise des polypropopylèneglycols.

9. Laques en poudre et suspensions de poudre suivant la revendication 8, **caractérisées en ce que** le poids moléculaire moyen numérique du polypropopylèneglycol est de 350 à 1000 daltons.

10. Laques en poudre et suspensions de poudre suivant l'une des revendications 1 à 9, **caractérisées en ce qu'**elles sont durcissables par voie physique ou thermique et/ou par rayonnement actinique.

11. Laques en poudre et suspensions de poudre suivant l'une des revendications 1 à 10, **caractérisées en ce qu'**elles sont exemptes de solvants organiques.

12. Laques en poudre et suspensions de poudre suivant l'une des revendications 1 à 11, **caractérisées en ce que**, dans les laques en poudre et les suspensions de poudre, la quantité totale des pigments à effet enduits se présente dans les particules de laque en poudre sous la forme d'une phase solide séparée ou partiellement dans les particules de laque en poudre et partiellement sous la forme d'une phase solide séparée.

13. Suspensions de poudre suivant l'une des revendications 1 à 12, **caractérisées en ce qu'**elles sont de structure visqueuse.

14. Utilisation des laques en poudre suivant l'une des revendications 1 à 12 et des suspensions de poudre suivant l'une des revendications 1 à 13, pour la préparation de laquages de base ou de couches à effet de combinaison dans des laquages multicouches donnant un effet.

15. Laquage multicouche donnant un effet qui comprend une couche à effet de combinaison et qui est préparable en appliquant une suspension de poudre suivant l'une des revendications 1 à 13 sur un laquage obtenu par électrodéposition, déposé par voie cathodique et durci thermiquement, ou par un procédé mouillé-sur-mouillé sur une couche de laque obtenue par électrodéposition, déposée par voie cathodique et non durcie ou uniquement partiellement, après quoi la couche de suspension de poudre résultante est durcie en soi seule par voie physique ou thermique et/ou avec un rayonnement actinique ou conjointement à la couche de laque obtenue par électrodéposition, par voie thermique ou par voie thermique et avec un rayonnement actinique, ce qui donne la couche à effet de combinaison.

16. Laquage multicouche donnant un effet suivant la revendication 15, **caractérisé en ce qu'**on recouvre, soit la couche de suspension de poudre, soit la couche à effet de combinaison, d'au moins un vernis transparent, après quoi la couche de vernis transparent résultante est durcie
(1) en soi seule par voie thermique et/ou avec un rayonnement actinique,
(2) conjointement à la couche de suspension de poudre par voie thermique et/ou avec un rayonnement actinique, ou
(3) conjointement à la couche de laque obtenue par électrodéposition et la couche de suspension de poudre par voie thermique ou par voie thermique et avec un rayonnement actinique.

17. Laquage multicouche donnant un effet qui comporte un laquage de base et qui est préparable
(1) en appliquant une charge sur un laquage obtenu par électrodéposition, déposé par voie cathodique et durci thermiquement, ou par un procédé mouillé-sur-mouillé sur une couche de laque obtenue par électrodéposition, déposée par voie cathodique et non durcie ou uniquement partiellement, après quoi
(2) on durcit la couche de charge obtenue en soi seule par voie thermique ou par voie thermique et avec un rayonnement actinique ou conjointement à la couche de laque obtenue par électrodéposition par voie thermique ou par voie thermique et avec un rayonnement actinique, ce qui donne le laquage de charge ou la couche de fond de protection contre les chutes de pierres,
(3) en appliquant une laque en poudre ou une suspension de poudre sur le laquage de charge ou la couche de fond de protection contre les chutes de pierres, ce qui permet d'obtenir une couche de laque en poudre ou une couche de suspension de poudre,
(4) en désaérant ou séchant la couche de laque en poudre ou la couche de suspension de poudre, sans la réticuler totalement, ou, d'une manière alternative, en la durcissant par voie physique ou thermique et/ou avec un rayonnement actinique, ce qui donne le laquage de base,
(5) en appliquant au moins un vernis transparent sur la couche de laque en poudre ou la couche de suspension de poudre ou, d'une manière alternative, sur le laquage de base, après quoi
(6) on durcit la couche de laque en poudre ou la couche de suspension de poudre et la ou les couche(s) de vernis transparent conjointement par voie thermique et/ou avec un rayonnement actinique, ou, d'une manière alternative, la couche de vernis transparent en soi seule par voie thermique et/ou avec un rayonnement actinique, ce qui donne le laquage de base et le laquage transparent,
**caractérisé en ce qu'**on utilise une laque en poudre suivant l'une des revendications 1 à 12 ou une suspension de poudre suivant l'une des revendications 1 à 13.
